# EUROPEAN PATENT APPLICATION

(11) **EP 4 847 952 A1**
(43) Date of publication of application: **02.12.2026**
(21) Application number: 26180958.6
(22) Date of filing: 26.05.2026
(51) Int. Cl.: G01S 7/481, G01S 17/931

(54) **OPTICAL-MECHANICAL ASSEMBLY, TRANSCEIVER MODULE AND LIDAR**

(30) Priority: 26.05.2025 CN 202510687136; 26.05.2025 CN 202510690681; 26.05.2025 CN 202510688446
(71) Applicant: Suteng Innovation Technology Co., Ltd., Shenzhen, Guangdong 518000 (CN)
(72) Inventor: XIA, Longguang, Shenzhen City (CN); YU, Zhiqiang, Shenzhen City (CN)
(74) Representative: Ran, Handong

(57) **Abstract**

Embodiments of the present application disclose an optical-mechanical assembly, a transceiver module, and a LiDAR. The optical-mechanical assembly comprises a transceiver unit, a transmitter lens, a receiver lens, a lens barrel, and an optical-mechanical bracket. The transceiver unit comprises a transmitter chip, a receiver chip, and a transceiver board; both the transmitter chip and the receiver chip are mounted on the transceiver board. The transmitter chip is located on a light-incident side of the transmitter lens; the receiver chip is located on a light-exiting side of the receiver lens. The lens barrel comprises a transmitter light-passing aperture and a receiver light-passing aperture; the transmitter lens is disposed at the transmitter light-passing aperture and the receiver lens is disposed at the receiver light-passing aperture. The transceiver board is located between the optical-mechanical bracket and the lens barrel.

## Description

### TECHNICAL FIELD

This application relates to the technical field of detection devices, and in particular to an optical-mechanical assembly, a transceiver module, and a LiDAR.

### BACKGROUND

With the development and widespread adoption of intelligent driving technology, LiDAR has gradually become an indispensable component of advanced intelligent driving solutions owing to its wide detection range and high detection accuracy. The working principle of LiDAR is as follows: the transmission module of the LiDAR first transmits outgoing laser light (scanning beams) toward a detection area, and then the receiving module of the LiDAR receives reflected laser light (echo beams) reflected from objects within the detection area. The processing module of the LiDAR compares the reflected laser light with the outgoing laser light and, after processing, obtains relevant information about objects such as distance, orientation, height, velocity, attitude, and even shape, among other parameters.

In the related art, LiDAR suffers from problems including a large number of components, high cost, and complex assembly processes. In addition, substrates of LiDAR carry a large number of electronic components, causing significant warpage of the circuit board, which increases the positional error of transmitter chips or receiver chips disposed on the circuit board relative to lenses, thereby adversely affecting the ranging performance of the LiDAR.

In the related art, transmitter lenses, receiver lenses, transmitter boards, and receiver boards in LiDAR are mostly independently designed, resulting in a large number of components and relatively large positional errors between them.

### SUMMARY

Embodiments of the present application provide an optical-mechanical assembly, a transceiver module, and a LiDAR, for addressing the problems in the related art of LiDAR having a large number of components, high cost, and complex assembly processes, as well as the problem of substrate warpage in transceiver modules.

Embodiments of the present application provide an optical-mechanical assembly comprising a transceiver unit, a transmitter lens, a receiver lens, a lens barrel, and an optical-mechanical bracket. The transceiver unit comprises a transmitter chip, a receiver chip, and a transceiver board, wherein both the transmitter chip and the receiver chip are mounted on the transceiver board. The lens barrel comprises a transmitter light-passing aperture and a receiver light-passing aperture; the transmitter lens is disposed at the transmitter light-passing aperture; the receiver lens is disposed at the receiver light-passing aperture; the transmitter chip is located on the light-incident side of the transmitter lens; and the receiver chip is located on the light-exiting side of the receiver lens. The transceiver board is located between the optical-mechanical bracket and the lens barrel.

In some embodiments, a thermally conductive gel is disposed between the transceiver board and the optical-mechanical bracket.

In some embodiments, the optical-mechanical bracket comprises a main optical-mechanical bracket and a plurality of mounting seats; the plurality of mounting seats are configured to connect the main optical-mechanical bracket and the lens barrel; and the plurality of mounting seats are circumferentially spaced apart around the main optical-mechanical bracket.

In some embodiments, a necked portion is formed at the connection position between a mounting seat and the main optical-mechanical bracket; and/or the optical-mechanical bracket further comprises a flanged structure, the flanged structure being connected to an edge of the main optical-mechanical bracket and located on a side of the main optical-mechanical bracket away from the transceiver board; the flanged structure is located between two adjacent mounting seats and is spaced apart from the mounting seats.

In some embodiments, the transceiver unit further comprises a flexible circuit board, the flexible circuit board comprising a first connection end, a second connection end, and a bend portion for connecting the first connection end and the second connection end. The bend portion comprises a first sub-bend portion and a second sub-bend portion; the second sub-bend portion is located between the first sub-bend portion and the second connection end; the first sub-bend portion is located between the first connection end and the second sub-bend portion; the second sub-bend portion is fixedly connected to the optical-mechanical bracket; and the second connection end is electrically connected to the transceiver board.

In some embodiments, the optical-mechanical assembly further comprises a fixing block; the first sub-bend portion and the second sub-bend portion together enclose a cavity; the fixing block is located in the cavity; one side of the fixing block is fixedly connected to the first sub-bend portion; and the other side of the fixing block is fixedly connected to the second sub-bend portion.

In some embodiments, the fixing block has elasticity.

In some embodiments, the lens barrel is provided with a partition extending in a direction toward the transceiver board; the lens barrel forms a transmitter chamber and a receiver chamber on opposite sides of the partition, respectively; the transmitter chamber communicates with the transmitter light-passing aperture, and the transmitter chip is located in the transmitter chamber; and the receiver chamber communicates with the receiver light-passing aperture, and the receiver chip is located in the receiver chamber.

In some embodiments, the transceiver board is provided with a positioning portion, and the lens barrel is provided with a positioning-fit portion; the positioning portion and the positioning-fit portion correspond one-to-one.

Embodiments of the present application provide a LiDAR comprising a housing and the optical-mechanical assembly described above, the optical-mechanical assembly being disposed within the housing.

In the optical-mechanical assembly and LiDAR of the embodiments of the present application, the transmitter chip and the receiver chip are disposed on the same board; compared with a configuration in which they are disposed on separate boards, this reduces the number of boards. The transceiver board is disposed adjacent to the optical-mechanical bracket, so that the optical-mechanical bracket can improve the heat dissipation efficiency of the transceiver board during operation of the optical-mechanical assembly, ensuring the operational performance and service life of the transceiver board. The transceiver board is located between the optical-mechanical bracket and the lens barrel, so that when the lens barrel and the optical-mechanical bracket are assembled and fixed, the transceiver board can be pressed and secured, thereby eliminating the need for additional installation and fixation of the transceiver board, reducing installation costs.

Embodiments of the present application further provide a transceiver module and a LiDAR, capable of reducing substrate warpage.

In a first aspect, embodiments of the present application provide a transceiver module comprising a reinforcing member, a transceiver circuit board, a lens barrel, and a plurality of fasteners. The transceiver circuit board comprises a substrate, a transmitter chip, and a receiver chip, wherein both the transmitter chip and the receiver chip are located on the same side of the substrate; the substrate is located between the reinforcing member and the lens barrel. The substrate comprises a plurality of first screw holes; the lens barrel comprises a plurality of second screw holes; the reinforcing member comprises a plurality of third screw holes; wherein one fastener passes through one third screw hole, one first screw hole, and one second screw hole in sequence.

In some embodiments, the distance between the centers of any two adjacent first screw holes is equal; or the distance between the centers of any two adjacent third screw holes is equal.

In some embodiments, the reinforcing member comprises a main board portion and a plurality of connecting arms, wherein each connecting arm is provided with one third screw hole, and each connecting arm extends from the main board portion toward the substrate.

In some embodiments, the reinforcing member further comprises a plurality of flanges, wherein each flange is folded from the main board portion in a direction away from the substrate; and at least one flange is located between two adjacent connecting arms.

In some embodiments, a crack-arrest groove is provided between the main board portion and each connecting arm.

In some embodiments, the reinforcing member further comprises a first boss extending from the main board portion toward the substrate, with a first gap between the first boss and the substrate.

In some embodiments, the lens barrel further comprises a second boss corresponding to the first boss, the second boss extending from the lens barrel toward the substrate, with a second gap between the second boss and the substrate.

In some embodiments, one of the substrate and the lens barrel is provided with a positioning hole, and the other of the substrate and the lens barrel is provided with a positioning post; one positioning post passes through one positioning hole; and a third gap exists between the positioning post and the corresponding positioning hole.

In a second aspect, embodiments of the present application provide a LiDAR comprising a housing and the transceiver module described in any one of the foregoing embodiments.

Based on the transceiver module of the embodiments of the present application, the transmitter chip and the receiver chip are mounted on the same side of the substrate, which can more effectively utilize the space of the substrate and avoids the additional space required when placing the transmitter chip and the receiver chip on opposite sides. The reinforcing member provides uniform support force for the substrate and is mounted on the side of the substrate facing away from the transmitter chip, thereby offsetting deformation stress of the substrate caused by the weight, heat, or other factors of the transmitter chip and the receiver chip. This uniform support force helps maintain the flatness of the substrate and reduces warpage. The reinforcing member also reduces bending deformation of the substrate when subjected to external forces; can effectively reduce the deformation effect of mechanical vibration, impact, and other external forces on the substrate, effectively enhancing the substrate's bending resistance and ensuring stability and reliability of the substrate in complex use environments.

The fastener connects the reinforcing member and the substrate to fix the reinforcing member to the substrate; the reinforcing member and the substrate are closely connected together through the fastener, ensuring no relative displacement between the reinforcing member and the substrate, so that the reinforcing member can effectively transmit stress throughout the entire substrate structure, enhancing the overall strength of the substrate. When the substrate is subjected to external forces or internal stresses, the fastener can uniformly distribute these stresses to the connection portions of the reinforcing member and the substrate, preventing substrate damage or deformation caused by localized stress concentration, reducing the risk of fatigue failure caused by stress concentration, thereby reducing the warpage of the substrate. Reduction of substrate warpage can reduce light-spot distortion and optical energy loss caused by substrate deformation, ensuring the quality and intensity of laser light emitted by the transmitter chip and echo light received by the receiver chip.

In addition, the reinforcing member can provide an additional heat dissipation path for heat generated by the transmitter chip and the receiver chip, conducting heat from the substrate to the reinforcing member and then dissipating it to the surrounding environment through the reinforcing member, thereby improving the overall heat dissipation efficiency of the substrate. The excellent heat dissipation performance of the reinforcing member can effectively reduce the operating temperature of the substrate and distribute temperature more uniformly across the substrate, reducing temperature differences between different regions of the substrate and thereby reducing warpage stress caused by different degrees of thermal expansion in different regions. Meanwhile, the fastener can also prevent the substrate from freely expanding or contracting with temperature changes, thereby reducing substrate warpage.

Embodiments of the present application further provide a transceiver module and a LiDAR, capable of adjusting the distance between the lens module and the transceiver circuit board and reducing positional errors.

In a first aspect, embodiments of the present application provide a transceiver module comprising a transceiver circuit board, a lens module, and a plurality of adjusting members. The transceiver circuit board comprises a substrate, a transmitter chip, and a receiver chip; both the transmitter chip and the receiver chip are mounted on the same side of the substrate. The lens module comprises a lens barrel and transceiver lenses disposed on the lens barrel; the plurality of adjusting members are spaced apart between the lens barrel and the substrate.

Based on the transceiver module of the embodiments of the present application, the transmitter chip and the receiver chip are mounted on the same side of the circuit board, so that the transmitting optical path and the receiving optical path can be designed and arranged on the same plane of the circuit board, facilitating alignment and adjustment of the optical axis, simplifying the optical path design, and improving the consistency and stability of the transceiver optical paths. This layout can also more effectively utilize the space of the circuit board, avoiding the additional space required when placing the transmitter chip and the receiver chip on opposite sides, thereby reducing the space occupied by the transceiver circuit board in its thickness direction, enabling transmitter and receiver chips to be accommodated in a more compact space, improving space utilization, and facilitating miniaturization of the LiDAR. The lens module comprises a lens barrel and transceiver lenses disposed on the lens barrel; this integrated lens module significantly reduces the number of components, making the overall layout of the transceiver module more compact and reasonable in a limited space and improving space utilization. The positions of the transceiver lenses are relatively fixed within the lens barrel, reducing the reliance on high-precision optical adjustment of the transceiver lenses during assembly, reducing assembly difficulty and production time, reducing manufacturing costs, and improving production efficiency.

In some embodiments, the adjusting member is a shim satisfying at least one of the following conditions: the thicknesses of the plurality of shims are all equal; at least two of the shims have different thicknesses; or at least one shim has a wedge shape. The plurality of spaced adjusting members disposed between the lens barrel and the circuit board adjust the distance between the lens barrel and the circuit board, thereby precisely controlling the relative positional relationship between the transceiver lenses and the transmitter chip, and between the transceiver lenses and the receiver chip, to eliminate the effect of assembly tolerances on imaging quality.

In some embodiments, one of the substrate and the lens barrel is provided with a positioning hole, and the other of the substrate and the lens barrel is provided with a positioning post; one positioning post passes through one positioning hole.

In some embodiments, a gap exists between the positioning post and the corresponding positioning hole.

In some embodiments, the transceiver module further comprises a plurality of fasteners; the substrate comprises a plurality of first screw holes; the lens barrel comprises a plurality of second screw holes; each adjusting member is provided with a through-hole; and one fastener passes through one first screw hole, one through-hole, and one second screw hole in sequence.

In some embodiments, the transceiver module further comprises a reinforcing member mounted on a side of the substrate facing away from the transmitter chip; the reinforcing member comprises a plurality of third screw holes; and one fastener passes through one third screw hole, one first screw hole, one through-hole, and one second screw hole in sequence.

In some embodiments, the reinforcing member comprises a main board portion and a plurality of connecting arms; each connecting arm is provided with one third screw hole; and the connecting arms extend from the main board portion toward the substrate.

In some embodiments, the plurality of connecting arms comprises a first connecting arm, a second connecting arm, and a third connecting arm; the first connecting arm and the second connecting arm are arranged on one side of the main board portion facing away from each other; and the third connecting arm is arranged on another side of the main board portion.

In some embodiments, a crack-arrest groove is provided between the main board portion and each connecting arm.

In a second aspect, embodiments of the present application provide a LiDAR comprising a housing and the transceiver module described in any one of the foregoing embodiments.

The transceiver module disclosed in the embodiments of the present application, by mounting the transmitter chip and the receiver chip on the same side of the circuit board, can simplify the optical path design and improve the consistency and stability of the transceiver optical paths. It can also reduce the space occupied by the transceiver circuit board in its thickness direction, facilitating miniaturization of the LiDAR. The plurality of spaced adjusting members can compensate for positional deviations caused by manufacturing tolerances, assembly errors, and other factors, improving beam collimation and focusing accuracy, reducing scattering and loss of optical signals, and thereby improving optical performance. In addition, the plurality of spaced adjusting members also provide uniform and stable support for the lens barrel, making its mounting on the circuit board more stable and reliable. This robust structure can effectively resist the influence of external vibration, temperature changes, and other environmental factors on the transceiver module, ensuring that the relative position between the lens barrel and the circuit board remains stable over long-term use, thereby maintaining the stability and consistency of optical performance.

### BRIEF DESCRIPTION OF THE DRAWINGS

To more clearly illustrate the technical solutions of the embodiments of the present application or of the prior art, the following briefly introduces the drawings needed in the description of the embodiments or the prior art. Obviously, the drawings described below are merely some embodiments of the present application, and those of ordinary skill in the art may also obtain other drawings based on these drawings without creative effort.
FIG. 1 is a schematic perspective view of a LiDAR according to an embodiment of the present application;
FIG. 2 is a schematic cross-sectional view of the LiDAR shown in FIG. 1;
FIG. 3 is a schematic exploded view of the LiDAR shown in FIG. 1;
FIG. 4 is a schematic cross-sectional view of a housing of the LiDAR shown in FIG. 1;
FIG. 5 is a schematic structural view of an optical-mechanical assembly of the LiDAR shown in FIG. 1;
FIG. 6 is a schematic cross-sectional view of an optical-mechanical assembly of a LiDAR according to an embodiment of the present application;
FIG. 7 is a schematic exploded view of the optical-mechanical assembly shown in FIG. 6;
FIG. 8 is a schematic exploded view of the optical-mechanical assembly shown in FIG. 6;
FIG. 9 is a schematic partial structural view of the optical-mechanical assembly shown in FIG. 6;
FIG. 10 is a schematic partial structural view of the optical-mechanical assembly shown in FIG. 6;
FIG. 11 is a schematic structural view of the optical-mechanical assembly shown in FIG. 6;
FIG. 12 is a schematic exploded view of the optical-mechanical assembly shown in FIG. 11;
FIG. 13 is a schematic partial structural view of a LiDAR according to an embodiment of the present application;
FIG. 14 is a schematic partial perspective view of the LiDAR shown in FIG. 13;
FIG. 15 is a schematic cross-sectional view of the LiDAR shown in FIG. 13;
FIG. 16 is a schematic partial structural view of FIG. 15;
FIG. 17 is a schematic view of one partial exploded structure of the LiDAR shown in FIG. 13;
FIG. 18 is a schematic view of another partial exploded structure of the LiDAR shown in FIG. 13;
FIG. 19 is a schematic structural view of a LiDAR according to an embodiment of the present application;
FIG. 20 is a schematic exploded view of the LiDAR shown in FIG. 19;
FIG. 21 is a schematic structural view of a transceiver module according to an embodiment of the present application;
FIG. 22 is a schematic exploded view of the transceiver module shown in FIG. 21;
FIG. 23 is a schematic structural view of the reinforcing member of the transceiver module shown in FIG. 21;
FIG. 24 is a schematic cross-sectional view of the transceiver module shown in FIG. 21 taken along section A-A;
FIG. 25 is an enlarged view of region B shown in FIG. 24;
FIG. 26 is a schematic structural view of a LiDAR according to one embodiment of the present application;
FIG. 27 is a schematic exploded view of the LiDAR shown in FIG. 26;
FIG. 28 is a schematic structural view of a transceiver module according to one embodiment of the present application;
FIG. 29 is a schematic exploded view of the transceiver module shown in FIG. 28 from a first perspective;
FIG. 30 is a schematic exploded view of the transceiver module shown in FIG. 28 from a second perspective;
FIG. 31 is an enlarged view of region A shown in FIG. 30;
FIG. 32 is a schematic structural view of another embodiment of the transceiver module of the present application;
FIG. 33 is a schematic structural view of the reinforcing member shown in FIG. 32.

### Description of reference numerals:

1, LiDAR;
10, housing; 11, base; 111, accommodation cavity; 112, opening; 113, step; 114, sleeve; 12, protective cover; 13, installation cavity;
20, optical-mechanical assembly; 211, transmitter chip; 212, receiver chip; 213, transceiver board; 2131, positioning mark point; 2132, limiting portion; 2133, ninth mounting hole; 214, flexible circuit board; 2141, bend portion; 23, transmitter lens; 24, receiver lens; 25, lens barrel; 25a, light-trapping cavity; 251, transmitter light-passing aperture; 252, receiver light-passing aperture; 253, connecting seat; 254, adhesive dispensing hole; 255, light-blocking sheet; 255a, first light-blocking sheet; 255b, second light-blocking sheet; 255c, third light-blocking sheet; 255d, fourth light-blocking sheet; 256, light-blocking post; 257, transmitter chamber; 258, receiver chamber; 259, partition; 250, communication opening; 2501, positioning-fit portion; 2502, eighth mounting hole; 26, optical-mechanical bracket; 261, main optical-mechanical bracket; 262, mounting seat; 263, necked portion; 264, flanged structure; 265, raised portion; 266, relief portion; 267, seventh mounting hole; 27, fixing block; 28, thermally conductive gel;
30, heat dissipation bracket; 31, first main bracket; 32, side bracket; 321, positioning portion; 33, rotating shaft; 34, through-hole;
40, driving member; 41, magnetic member; 42, electromagnetic winding; 421, iron core; 4211, mounting position; 4212, yoke portion; 4213, tooth portion; 4214, tooth tip; 422, coil; 43, positioning-fit portion;
51, code disc; 511, detection portion;512, limiting hook; 513, fixing seat; 52, photoelectric switch;
61, wireless charging transmitter unit; 62, wireless charging receiver unit;
71, bearing;
81, power supply board; 82, main board;
1000, LiDAR;
2-1, transceiver module; 2-100, transceiver circuit board; 2-10, substrate; 2-11, first screw hole;
2-20, transmitter chip;
2-30, receiver chip;
2-40, reinforcing member; 2-41, main board portion; 2-42, connecting arm; 2-421, third screw hole; 2-43, flange; 2-44, crack-arrest groove; 2-45, first boss;
2-50, fastener;
2-60, thermally conductive member;
2-200, lens module; 2-210, lens barrel; 2-211, lens barrel body; 2-212, second boss; 2-220, lens; 2-221, transmitter lens; 2-222, receiver lens;
2-2, housing;
3-1000, LiDAR;
3-1, transceiver module; 3-100, transceiver circuit board; 3-10, substrate; 3-11, positioning hole; 3-12, first screw hole;
3-20, transmitter chip;
3-30, receiver chip;
3-40, adjusting member; 3-41, through-hole;
3-50, fastener;
3-60, reinforcing member;
3-61, main board portion; 3-62, connecting arm; 3-621, third screw hole; 3-622, mating portion; 3-63, flange; 3-64, crack-arrest groove;
3-200, lens module; 3-210, lens barrel; 3-211, positioning post; 3-212, second screw hole;3-220, transceiver lenses; 3-2, housing;
x, first direction; y, second direction; z, third direction.

### DETAILED DESCRIPTION

To make the objectives, technical solutions, and advantages of the embodiments of the present application clearer, the following provides a further detailed description of the embodiments of the present application in conjunction with the drawings.

When the following description refers to the drawings, unless otherwise indicated, the same numerals in different drawings represent the same or similar elements. The embodiments described in the following exemplary embodiments do not represent all embodiments consistent with the present application. Rather, they are merely examples of devices and methods consistent with certain aspects of the present application as detailed in the appended claims.

The transmission module of the LiDAR first transmits outgoing laser light toward a detection area, and then the receiving module of the LiDAR receives reflected laser light reflected from objects within the detection area. The processing module of the LiDAR compares the reflected laser light with the outgoing laser light and, after processing, obtains relevant information about objects such as distance, orientation, height, velocity, attitude, and even shape. In the related art, LiDAR suffers from problems including a large number of components, high cost, and complex assembly processes.

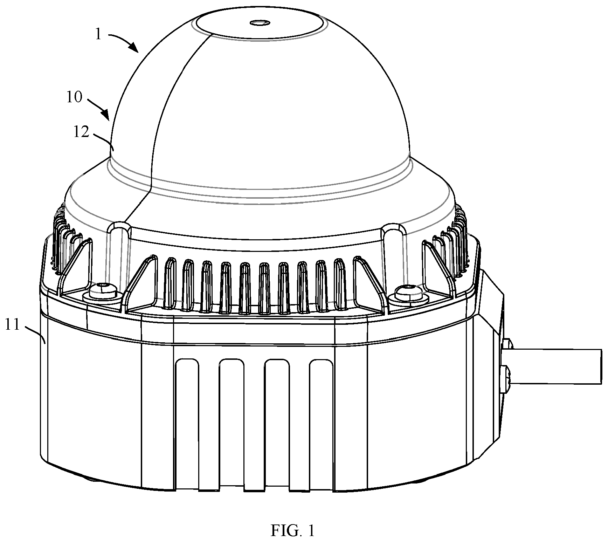

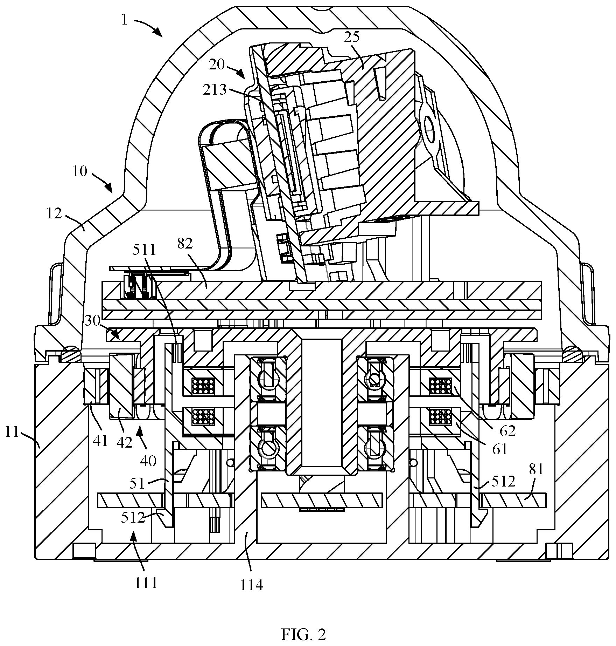

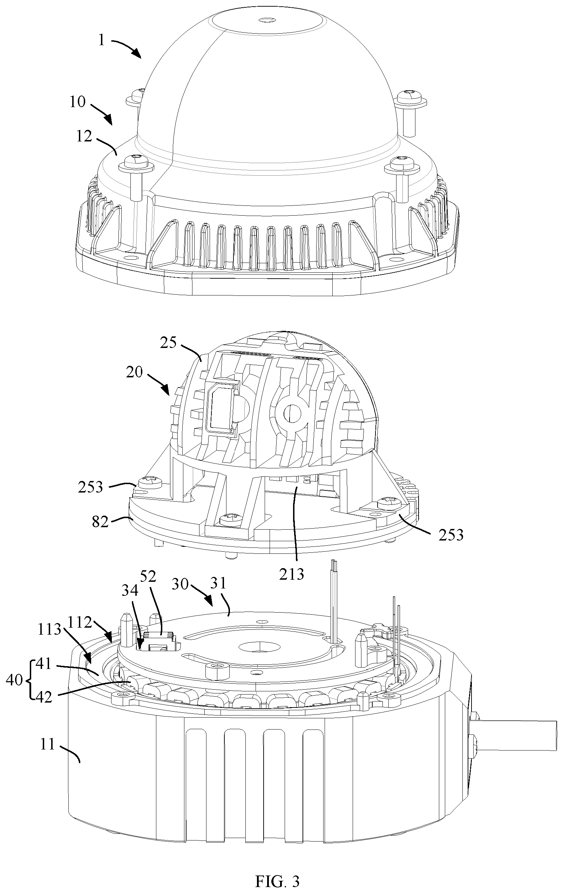

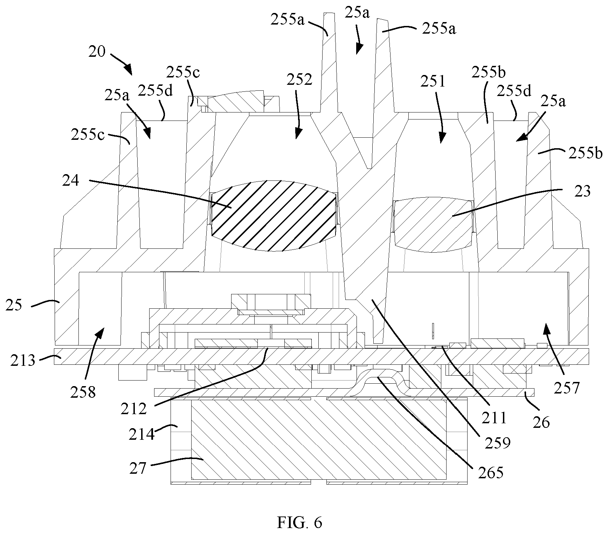

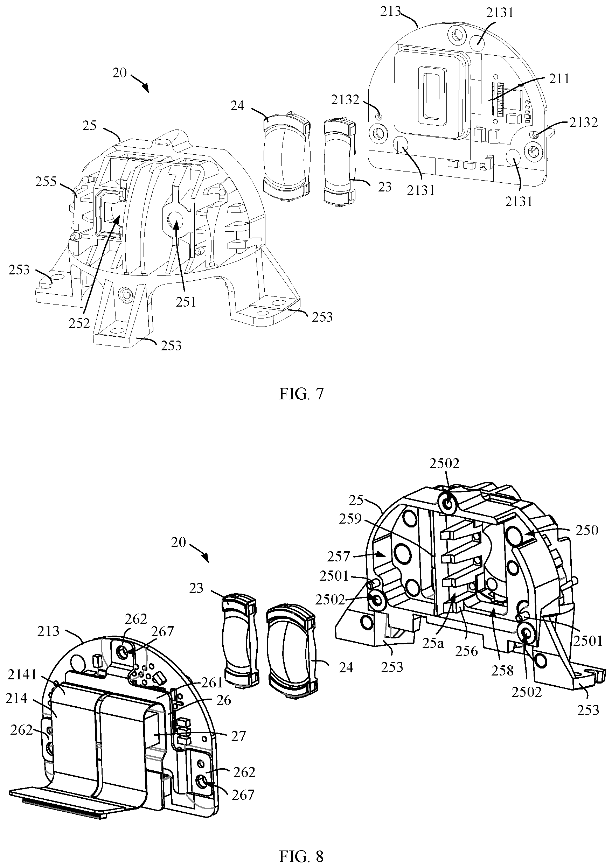

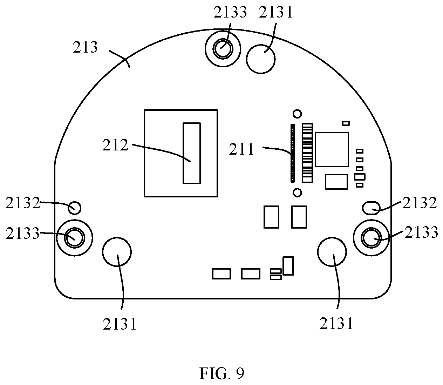

In one embodiment, referring to FIGs. 1 through 9, the LiDAR 1 comprises a housing 10 and an optical-mechanical assembly 20 located within the housing 10. The optical-mechanical assembly 20 comprises a transceiver unit, a transmitter lens 23, a receiver lens 24, and a lens barrel 25. The transceiver unit comprises a transmitter chip 211, a receiver chip 212, and a transceiver board 213. Both the transmitter chip 211 and the receiver chip 212 are mounted on the transceiver board 213. The lens barrel 25 comprises a transmitter light-passing aperture 251 and a receiver light-passing aperture 252; the transmitter lens 23 is disposed at the transmitter light-passing aperture 251; the receiver lens 24 is disposed at the receiver light-passing aperture 252; the transmitter chip 211 is located on the light-incident side of the transmitter lens 23; and the receiver chip 212 is located on the light-exiting side of the receiver lens 24. The transceiver board 213 is located between the optical-mechanical bracket 26 and the lens barrel 25.

In the embodiments of the present application, the transmitter chip 211 and the receiver chip 212 are disposed on the same board; compared with a configuration in which they are disposed on separate boards, this reduces the number of boards. The transceiver board 213 is disposed adjacent to the optical-mechanical bracket 26, so that the optical-mechanical bracket 26 can improve the heat dissipation efficiency of the transceiver board 213 during operation of the optical-mechanical assembly 20, ensuring the operational performance and service life of the transceiver board 213. The transceiver board 213 is located between the optical-mechanical bracket 26 and the lens barrel 25, so that when the lens barrel 25 and the optical-mechanical bracket 26 are assembled and fixed, the transceiver board 213 can be pressed and secured, thereby eliminating the need for additional installation and fixation of the transceiver board 213, reducing installation costs, and simplifying the installation process. Both the transmitter chip 211 and the receiver chip 212 are electrically connected to the transceiver board 213. The optical-mechanical bracket 26 is mounted on the lens barrel 25.

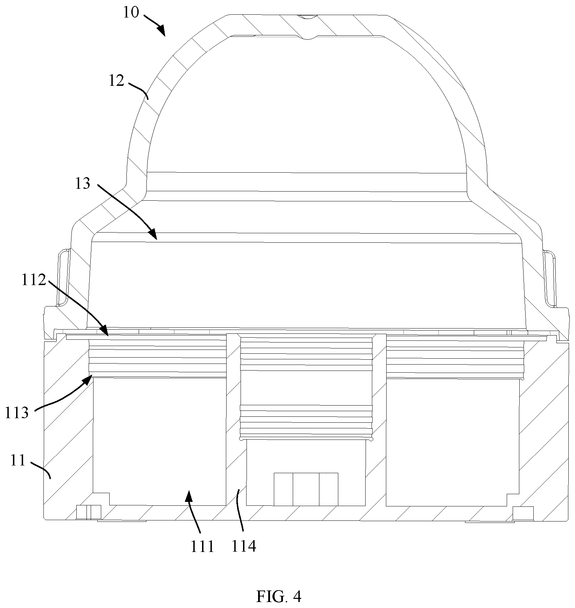

Referring to FIG. 4, the housing 10 is described in detail. The housing 10 comprises a base 11; the base 11 is formed with an accommodation cavity 111 and an opening 112 communicating with the accommodation cavity 111; and a step 113 is formed on the open end face of the base 11. The base 11 is configured for mounting and fixation to a device to be installed (e.g., a robot or a vehicle), thereby achieving mounting and fixation of the LiDAR 1 on the device to be installed. In some embodiments, the step 113 is arranged around the rotation axis of the optical-mechanical assembly 20. For example, the step 113 is an annular step whose step face is a circular ring surface. A sleeve 114 is disposed inside the base 11; the sleeve 114 is connected to the inner bottom wall of the base 11 and extends away from the inner bottom wall. The sleeve 114 is disposed substantially corresponding to the center of the inner bottom wall of the base 11.

The housing 10 further comprises a protective cover 12; the protective cover 12 is connected to the base 11 and, together with the base 11, forms an installation cavity 13. The optical-mechanical assembly 20, the heat dissipation bracket 30, and the driving member 40 are all located in the installation cavity 13 of the housing 10. The protective cover 12 is a light-transmitting protective cover so that the LiDAR 1 can transmit scanning beams to target objects outside the LiDAR 1 through the protective cover 12, and receive echo beams passing through the protective cover 12. The echo beams are formed by target objects reflecting at least part of the detection light.

The protective cover 12 and the base 11 may be fixed by adhesive bonding, screws, or other means, which is not limited in the embodiments of the present application. The protective cover 12 and the base 11 are sealingly connected to prevent moisture and other contaminants from entering the installation cavity 13 through the gap between the protective cover 12 and the base 11, thereby affecting the operation of internal components of the LiDAR 1.

The protective cover 12 may be made of a plastic member or a glass product; plastic members have lower cost, which is beneficial for reducing the cost of the LiDAR 1. Glass products have higher rigidity relative to plastic members, improving scratch resistance and impact resistance. At least part of the base 11 is made of a metal member to form an electromagnetic shielding structure, reducing electromagnetic interference between the LiDAR 1 and the external environment. In the embodiments of the present application, the entire base 11 is made of a metal member.

It should be noted that during actual production and processing, while maintaining sufficient internal space in the installation cavity 13, the size of the protective cover 12 may be increased and the size of the base 11 compressed according to requirements, i.e., by reducing the metal member and increasing the plastic member, so as to reduce costs.

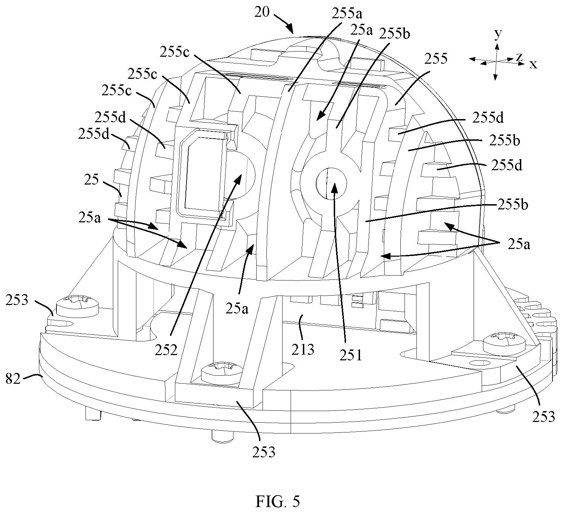

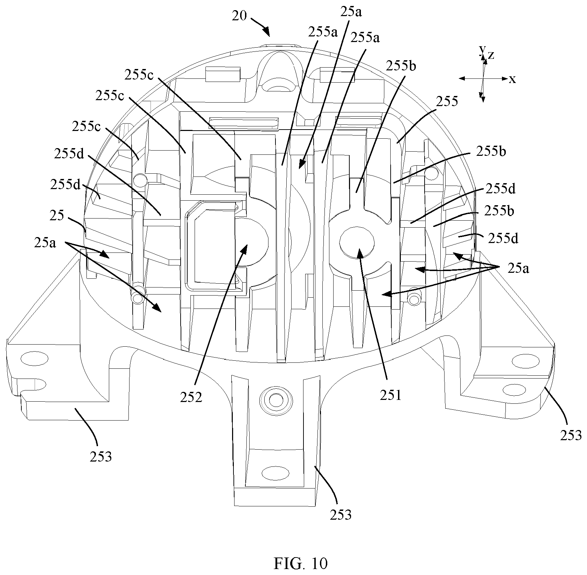

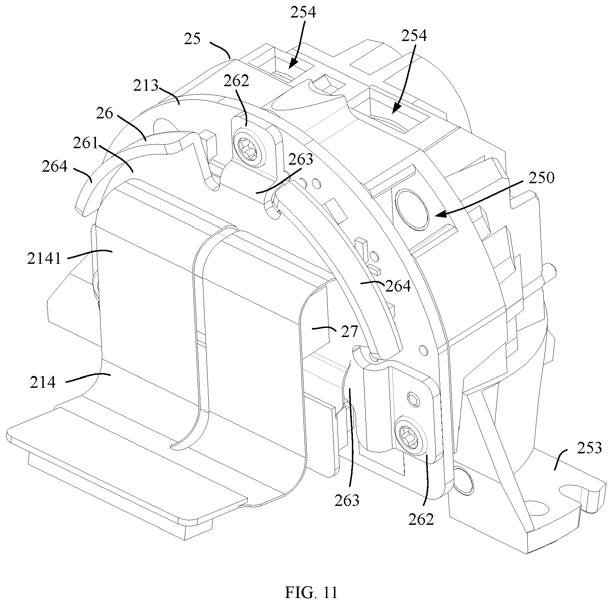

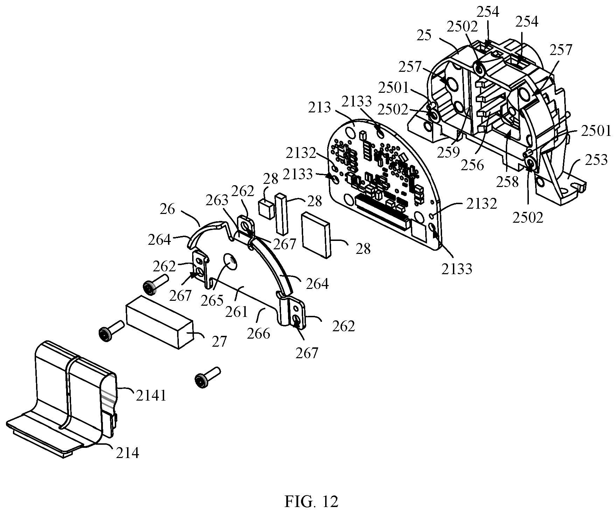

Referring to FIGS. 5 through 12, the optical-mechanical assembly 20 is described in detail. The optical-mechanical assembly 20 is located within the housing 10 and is electrically connected to the main board 82. The optical-mechanical assembly 20 comprises a transceiver unit, a transmitter lens 23, a receiver lens 24, and a lens barrel 25. The transceiver unit comprises a transmitter chip 211 and a receiver chip 212; the transmitter chip 211 is located on the light-incident side of the transmitter lens 23. The receiver chip 212 is located on the light-exiting side of the receiver lens 24. The lens barrel 25 is formed with a transmitter light-passing aperture 251 and a receiver light-passing aperture 252; the transmitter lens 23 is disposed at the transmitter light-passing aperture 251; the receiver lens 24 is disposed at the receiver light-passing aperture 252. Mounting the transmitter lens 23 and the receiver lens 24 in the same lens barrel 25 can save the assembly steps of the lens barrel 25 and the housing 10 compared with mounting them in different lens barrels.

Since the dimensions of the transmitter chip 211 and the receiver chip 212 on the transceiver board are not completely identical (e.g., heights differ), the positions of the transmitter lens 23 and the receiver lens 24 need to be dynamically adjusted according to the image-plane positions of the transmitter chip 211 and the receiver chip 212. The separate design of the transmitter lens 23 and the receiver lens 24 described above facilitates dynamic adjustment of the positions of the transmitter lens 23 and the receiver lens 24 within the lens barrel 25 according to the selection heights of different chips. The methods for adjusting the positions of the transmitter lens 23 and the receiver lens 24 within the lens barrel 25 are various; for example, adjustment may be made by means of shims, external jigs, or directly modifying the structure of the lens bearing surface inside the lens barrel 25.

The transceiver unit further comprises a transceiver board 213; both the transmitter chip 211 and the receiver chip 212 are mounted on the transceiver board 213 and electrically connected to the transceiver board 213. The transmitter chip 211 and the receiver chip 212 are disposed on the same board, which saves assembly steps. The transceiver board 213 is electrically connected to the main board 82.

Since the transmitter chip 211 and the receiver chip 212 are disposed on the same board, their relative positional accuracy cannot be adjusted by a subsequent optical focusing process as with individual boards. Therefore, their relative positional accuracy is particularly sensitive to the accuracy of the LiDAR 1. To improve the relative positional accuracy of the transmitter chip 211 and the receiver chip 212, in the embodiments of the present application, the transceiver board 213 is provided with a plurality of positioning mark points 2131.

The assembly process for the receiver chip 212 may comprise: aligning the receiver chip 212 with the positioning mark points 2131 on the transceiver board 213 using its own mark points, and then surface-mounting it onto the transceiver board 213. Specifically, the mark points of the receiver chip 212 and the positioning mark points 2131 on the transceiver board 213 may be identified by visual recognition, and then aligned according to the theoretical values of the relative coordinates of the two.

The assembly process for the transmitter chip 211 may comprise: aligning the transmitter chip 211 with the positioning mark points 2131 on the transceiver board 213 using its own mark points, and then surface-mounting it onto the transceiver board 213. Specifically, the mark points of the transmitter chip 211 and the positioning mark points 2131 on the transceiver board 213 may be identified by visual recognition, and then aligned according to the theoretical values of the relative coordinates of the two.

The transceiver board 213 is provided with a limiting portion 2132, and the lens barrel 25 is provided with a positioning-fit portion 2501; the limiting portion 2132 is connected to the positioning-fit portion 2501. The provision of the limiting portion 2132 and the positioning-fit portion 2501 facilitates positioning of the installation of the transceiver board 213 and the lens barrel 25.

In some embodiments, one of the limiting portion 2132 and the positioning-fit portion 2501 is a positioning hole and the other is a positioning post; at least part of the positioning post extends into the positioning hole to achieve positioning and installation between the transceiver board 213 and the lens barrel 25. For example, the limiting portion 2132 is a positioning hole and the positioning-fit portion 2501 is a positioning post. The transceiver board 213 is provided with a positioning hole and the lens barrel 25 is provided with a positioning post. Alternatively, the limiting portion 2132 is a positioning post and the positioning-fit portion 2501 is a positioning hole, i.e., the transceiver board 213 is provided with a positioning post and the lens barrel 25 is provided with a positioning hole.

In one embodiment, to achieve high centering accuracy between the transceiver chips and the transceiver lenses, during the manufacturing process of the transceiver board 213, a high positional accuracy is maintained between the limiting portion 2132 and the positioning mark points 2131. The positional accuracy between the limiting portion 2132 and the positioning mark points 2131 is ensured by the PCB manufacturing process. Using a high-precision CCD drilling machine, when forming the limiting portion 2132, the position of the positioning mark points 2131 is captured; when the distance from the limiting portion 2132 to the positioning mark points 2131 is less than 100 mm, the positional accuracy requirement from the limiting portion 2132 to the positioning mark points 2131 reaches +/-3 mil, i.e., +/-0.075 mm. The limiting portion 2132 may be a non-metallized hole.

The transceiver unit further comprises a flexible circuit board 214; the flexible circuit board 214 is electrically connected to the transceiver board 213 and the main board 82. The flexible circuit board 214 has flexibility and can be adaptively deformed according to the reserved space inside the LiDAR 1. The lens barrel 25 may be made of a plastic member; plastic members have lower cost, which is beneficial for reducing the cost of the LiDAR 1.

The narrowed-opening design of the light-exiting side of the transmitter light-passing aperture 251 and the narrowed-opening design of the light-incident side of the receiver light-passing aperture 252 prevent introducing too much stray light due to too large an aperture, and also prevent affecting ranging due to too small an aperture. At least one of the image-side, object-side, interior of the transmitter light-passing aperture 251, and interior of the receiver light-passing aperture 252 of the lens barrel 25 is provided with a light-trapping cavity 25a. The light-trapping cavity 25a can confine stray light within the void of the light-trapping cavity 25a, reducing the energy level of stray light, thereby reducing interference of stray light with transceiver signals and improving the detection performance of the LiDAR 1.

The image side of the lens barrel 25 refers to the side of the lens barrel 25 closer to the receiver chip 212. Since the transmitter chip 211 and the receiver chip 212 are on the same side of the lens barrel 25, providing the light-trapping cavity 25a on the image side of the lens barrel 25 can provide the light-trapping cavity 25a at the portion of the lens barrel 25 near the receiver chip 212 and/or the portion of the lens barrel 25 near the transmitter chip 211, thereby attenuating stray light at the receiver chip 212 and/or the transmitter chip 211.

The object side of the lens barrel 25 refers to the side of the lens barrel 25 closer to the target object. Since the light-exiting side of the transmitter light-passing aperture 251 and the light-incident side of the receiver light-passing aperture 252 are both near the target object, providing the light-trapping cavity 25a on the object side of the lens barrel 25 can provide the light-trapping cavity 25a at the portion of the lens barrel 25 near the light-exiting side of the transmitter light-passing aperture 251 and/or the portion near the light-incident side of the receiver light-passing aperture 252, thereby attenuating stray light on the light-exiting side of the transmitter light-passing aperture 251 and the light-incident side of the receiver light-passing aperture 252. Providing the light-trapping cavity 25a inside the transmitter light-passing aperture 251 of the lens barrel 25 can attenuate stray light inside the transmitter light-passing aperture 251. Providing the light-trapping cavity 25a inside the receiver light-passing aperture 252 of the lens barrel 25 can attenuate stray light inside the receiver light-passing aperture 252.

In one embodiment, the optical-mechanical assembly 20 further comprises a plurality of light-blocking sheets 255; the light-blocking sheets 255 are connected to the lens barrel 25 and protrude from the lens barrel 25; a light-trapping cavity 25a is formed between two adjacent light-blocking sheets 255. In this way, the light-blocking sheets 255 can not only form light-trapping cavities 25a to attenuate the intensity of stray light, but can also serve as reinforcing ribs to improve the structural strength of the lens barrel 25, preventing deformation of the lens barrel 25 during fixation (by screw fastening or adhesive bonding) that would affect the optical performance of the LiDAR 1.

The light-blocking sheets 255 and the lens barrel 25 may be integrally formed, saving the connection steps between the two and improving the reliability of the connection between the two. That is, single-layer or multi-layer light-blocking sheets 255 may be integrally formed on the lens barrel 25 to simultaneously form light-trapping cavities 25a while improving the structural strength of the lens barrel 25. The light-blocking sheets 255 may be plastic members. The surface of the light-blocking sheets 255 may be ink-treated or provided with an anti-reflection coating to further reduce the energy of stray light.

The light-blocking sheets 255 are substantially sheet-like in structure, having sufficient surface area to improve stray light attenuation effect; and the sheet-like structure is relatively thin, enabling more layers to be provided for a given weight to form more light-trapping cavities 25a, thereby improving stray light attenuation effect and improving the structural strength of the lens barrel 25.

At least one of the image-side, object-side, interior of the transmitter light-passing aperture 251, and interior of the receiver light-passing aperture 252 of the lens barrel 25 is provided with light-blocking sheets 255.

In the embodiments of the present application, at least one of the image-side and object-side of the lens barrel 25 is provided with light-blocking sheets 255. The image-side and object-side of the lens barrel 25 have larger space dimensions, which facilitates placement of light-blocking sheets 255.

In one embodiment, the plurality of light-blocking sheets 255 comprises at least one first light-blocking sheet 255a; the first light-blocking sheet 255a is located between the transmitter light-passing aperture 251 and the receiver light-passing aperture 252 along the first direction X; the first light-blocking sheet 255a and at least one other light-blocking sheet 255 are arranged opposite to and spaced apart from each other along the first direction X, forming a light-trapping cavity 25a. The light-trapping cavity 25a corresponding to the first light-blocking sheet 255a can suppress cross-talk between the light from the transmitter end and the light from the receiver end; for example, it can suppress stray light generated at the transmitter end from propagating to the receiver end.

The number of first light-blocking sheets 255a may be one or at least two. If the number of first light-blocking sheets 255a is one, the first light-blocking sheet 255a may form a light-trapping cavity 25a with other light-blocking sheets 255. In the embodiments of the present application, the plurality of light-blocking sheets 255 comprises at least two first light-blocking sheets 255a spaced apart along the first direction X. Two adjacent first light-blocking sheets 255 may form a light-trapping cavity 25a between the transmitter light-passing aperture 251 and the receiver light-passing aperture 252, and this light-trapping cavity 25a suppresses cross-talk between the light from the transmitter end and the light from the receiver end.

In one embodiment, the plurality of light-blocking sheets 255 comprises at least one second light-blocking sheet 255b; the second light-blocking sheet 255b is located on a side of the transmitter light-passing aperture 251 remote from the receiver light-passing aperture 252 along the first direction X; the second light-blocking sheet 255b and at least one other light-blocking sheet 255 are arranged opposite to and spaced apart from each other along the first direction X, forming a light-trapping cavity 25a. The light-trapping cavity 25a corresponding to the second light-blocking sheet 255b primarily suppresses stray light from the transmitter end itself.

The number of second light-blocking sheets 255b may be one or at least two. If the number of second light-blocking sheets 255b is one, the second light-blocking sheet 255b may form a light-trapping cavity 25a with other light-blocking sheets 255. In the embodiments of the present application, the plurality of light-blocking sheets 255 comprises at least two second light-blocking sheets 255b spaced apart along the first direction X; two adjacent second light-blocking sheets 255 may form a light-trapping cavity 25a on the transmitter light-passing aperture 251 side, and this light-trapping cavity 25a primarily suppresses stray light from the transmitter end itself.

In one embodiment, the plurality of light-blocking sheets 255 further comprises at least one third light-blocking sheet 255c; the third light-blocking sheet 255c is located on a side of the receiver light-passing aperture 252 remote from the transmitter light-passing aperture 251 along the first direction X; the third light-blocking sheet 255c and at least one other light-blocking sheet 255 are arranged opposite to and spaced apart from each other along the first direction X, forming a light-trapping cavity 25a. The light-trapping cavity 25a corresponding to the third light-blocking sheet 255c primarily suppresses stray light from the receiver end itself.

The number of third light-blocking sheets 255c may be one or at least two. If the number of third light-blocking sheets 255c is one, the third light-blocking sheet 255c may form a light-trapping cavity 25a with other light-blocking sheets 255. In the embodiments of the present application, the plurality of light-blocking sheets 255 comprises at least two third light-blocking sheets 255c spaced apart along the first direction X; two adjacent third light-blocking sheets 255 may form a light-trapping cavity 25a on the receiver light-passing aperture 252 side, and this light-trapping cavity 25a primarily suppresses stray light from the receiver end itself.

In some embodiments, the plurality of light-blocking sheets 255 may comprise one or more of the first light-blocking sheet 255a, the second light-blocking sheet 255b, and the third light-blocking sheet 255c, which is not limited herein.

In one embodiment, the first light-blocking sheet 255a, the second light-blocking sheet 255b, and the third light-blocking sheet 255c all extend along the second direction Y. The first direction X and the second direction Y intersect within a first plane; the first plane is perpendicular to the third direction Z; the first direction X is along the distribution direction of the transmitter light-passing aperture 251 and the receiver light-passing aperture 252; and the third direction Z is along the distribution direction of the image-side and object-side of the lens barrel 25. For example, in FIG. 5, the first direction X is along the horizontal direction, the second direction Y is along the vertical direction, and the third direction Z is along the depth direction.

The plurality of light-blocking sheets 255 further comprises a fourth light-blocking sheet 255d; the fourth light-blocking sheet 255d extends along the first direction X; and the fourth light-blocking sheet 255d is provided between at least two of the first light-blocking sheet 255a, the second light-blocking sheet 255b, and the third light-blocking sheet 255c. The provision of the fourth light-blocking sheet 255d is conducive to forming more and denser light-trapping cavities 25a, improving stray light attenuation effect and improving the structural strength of the lens barrel 25. Referring to FIG. 5, the first light-blocking sheet 255a, the second light-blocking sheet 255b, and the third light-blocking sheet 255c all extend substantially vertically and are spaced apart in the horizontal direction, while the fourth light-blocking sheet 255d extends substantially horizontally and is spaced apart in the vertical direction.

It should be noted that the numbers and positions of the first light-blocking sheet 255a, the second light-blocking sheet 255b, the third light-blocking sheet 255c, and the fourth light-blocking sheet 255d may be determined by simulation. For example, based on structural rigidity simulation of the lens barrel 25, it is determined which position of the lens barrel 25 requires placement of light-blocking sheets 255 and the extension direction (e.g., horizontal or vertical) of the light-blocking sheets 255 at that position. Based on stray light simulation near the lens barrel 25, it is determined which position requires placement of light-blocking sheets 255 and the number of light-blocking sheets 255 at that position.

In one embodiment, the optical-mechanical assembly 20 further comprises a plurality of light-blocking posts 256; the light-blocking posts 256 are connected to the lens barrel 25 and protrude from the lens barrel 25; a light-trapping cavity 25a is formed between two adjacent light-blocking posts 256. In this way, the light-blocking posts 256 can not only form light-trapping cavities 25a to attenuate the intensity of stray light, but can also serve as reinforcing ribs to improve the structural strength of the lens barrel 25. The light-blocking posts 256 and the lens barrel 25 may be integrally formed, saving the connection steps between the two and improving the reliability of the connection between the two. That is, a single or multiple light-blocking posts 256 may be integrally formed on the lens barrel 25 to form light-trapping cavities 25a, attenuate the intensity of stray light, and improve the structural strength of the lens barrel 25. The light-blocking posts 256 may be plastic members. The light-blocking posts 256 are substantially column-shaped in structure, with a relatively small cross-section, suitable for placement within small spaces. At least one of the image-side, object-side, interior of the transmitter light-passing aperture 251, and interior of the receiver light-passing aperture 252 of the lens barrel 25 is provided with light-blocking posts 256.

In the embodiments of the present application, at least one of the interior of the transmitter light-passing aperture 251 and the interior of the receiver light-passing aperture 252 of the lens barrel 25 is provided with light-blocking posts 256. The interior spaces of the transmitter light-passing aperture 251 and the receiver light-passing aperture 252 of the lens barrel 25 are relatively small, which is suitable for placement of light-blocking posts 256.

In one embodiment, the light-blocking posts 256 extend along the third direction Z, wherein the third direction Z is along the distribution direction of the image-side and object-side of the lens barrel 25. It will be appreciated that since the transmitter light-passing aperture 251 and the receiver light-passing aperture 252 extend along the third direction Z, designing the light-blocking posts 256 to also extend along the third direction Z facilitates attenuation of stray light along the extension direction of the transmitter light-passing aperture 251 and the receiver light-passing aperture 252.

In the embodiments of the present application, light-blocking posts 256 are provided on the side of the receiver light-passing aperture 252 adjacent to the transmitter light-passing aperture 251. Since the receiver end of the LiDAR 1 is more sensitive to stray light, providing light-blocking posts 256 inside the receiver light-passing aperture 252 to form light-trapping cavities 25a can better attenuate stray light at the receiver end and ensure the detection performance of the LiDAR 1. Placing the light-blocking posts 256 inside the receiver light-passing aperture 252 on the side adjacent to the transmitter light-passing aperture 251 can, within a limited space, better suppress stray light generated at the transmitter end from propagating to the receiver end.

It will be appreciated that when space dimensions are sufficient, the entire circumference of the receiver light-passing aperture 252 may be provided with light-blocking posts 256 to form light-trapping cavities 25a, which is not limited herein.

In one embodiment, the lens barrel 25 is provided with a plurality of connecting seats 253 circumferentially spaced apart; the connecting seats 253 may be used for mounting and fixing the lens barrel 25. For example, the lens barrel 25 may be connected and fixed to the heat dissipation bracket 30 through the connecting seats 253. The lens barrel 25 may be provided with a plurality of connecting seats 253 circumferentially spaced apart to make the mounting and fixing of the lens barrel 25 more reliable and less prone to tilting. The plurality of connecting seats 253 are distributed as uniformly as possible.

In one embodiment, the connecting seats 253 are provided with reinforcing ribs. The reinforcing ribs can improve the rigidity of the lens barrel 25 at the connecting seats 253; in this way, when the lens barrel 25 is fastened with screws, the deformation of the lens barrel and lenses caused by screw fastening forces can be minimized, thereby preventing variations in optical performance that would affect ranging performance.

In one embodiment, the side wall of the lens barrel 25 is formed with an adhesive dispensing hole 254 communicating with the transmitter light-passing aperture 251 and/or the receiver light-passing aperture 252. After the transmitter lens 23 is placed in the transmitter light-passing aperture 251, adhesive can be dispensed into the transmitter light-passing aperture 251 through the adhesive dispensing hole 254 to fix the transmitter lens 23 to the lens barrel 25. After the receiver lens 24 is placed in the receiver light-passing aperture 252, adhesive can be dispensed into the receiver light-passing aperture 252 through the adhesive dispensing hole 254 to fix the receiver lens 24 to the lens barrel 25. The side walls of the transmitter lens 23 and the receiver lens 24 may be ink-treated; in this way, even if light enters the lens barrel 25 through the adhesive dispensing hole 254, it will be blocked by the side walls of the transmitter lens 23 or receiver lens 24 and will not form stray light that affects the operation of the LiDAR 1.

In one embodiment, the optical-mechanical assembly 20 further comprises an optical-mechanical bracket 26; the optical-mechanical bracket 26 is mounted on the lens barrel 25; and the transceiver board 213 is located between the optical-mechanical bracket 26 and the lens barrel 25. The transceiver board 213 is disposed adjacent to the optical-mechanical bracket 26, so that the optical-mechanical bracket 26 can improve the heat dissipation efficiency of the transceiver board 213 during operation of the optical-mechanical assembly 20, ensuring the operational performance and service life of the transceiver board 213. The transceiver board 213 is located between the optical-mechanical bracket 26 and the lens barrel 25, so that when the lens barrel 25 and the optical-mechanical bracket 26 are assembled and fixed, the transceiver board 213 can be pressed and secured, eliminating the need for additional installation and fixation of the transceiver board 213 and reducing installation costs.

In some embodiments, the optical-mechanical bracket 26 and the lens barrel 25 may be assembled and fixed by a locking member. Specifically, the optical-mechanical bracket 26 is formed with a seventh mounting hole 267, and the lens barrel 25 is formed with an eighth mounting hole 2502; a locking member passes through the seventh mounting hole 267 and the eighth mounting hole 2502 to achieve assembly and fixation of the optical-mechanical bracket 26 and the lens barrel 25. The locking member may comprise a bolt, or may comprise a bolt and a nut used together with the bolt, which is not limited herein.

In some embodiments, the locking member may avoid the transceiver board 213 in assembling and fixing the optical-mechanical bracket 26 to the lens barrel 25. In other embodiments, the locking member may pass through the ninth mounting hole 2133 on the transceiver board 213 to assemble and fix the optical-mechanical bracket 26 to the lens barrel 25.

A thermally conductive gel 28 is disposed between the transceiver board 213 and the optical-mechanical bracket 26. Heat generated by the transmitter chip 211, the receiver chip 212, and other components can be transferred to the optical-mechanical bracket 26 through the thermally conductive gel, thereby providing uniform heat dissipation.

It should be noted that thermally conductive gel 28 may be correspondingly provided for the transmitter chip 211, the receiver chip 212, and other heat-generating components on the transceiver board 213 to improve the heat dissipation performance of the heat-generating components. The optical-mechanical bracket 26 may be made of an aluminum alloy material with good thermal conductivity.

The flexible circuit board 214 as a whole is located on the side of the optical-mechanical bracket 26 facing away from the transceiver board 213. The flexible circuit board 214 comprises a first connection end, a second connection end, and a bend portion 2141 for connecting the first connection end and the second connection end. The bend portion 2141 comprises a first sub-bend portion and a second sub-bend portion; the second sub-bend portion is located between the first sub-bend portion and the second connection end; the first sub-bend portion is located between the first connection end and the second sub-bend portion; the second sub-bend portion is fixedly connected to the optical-mechanical bracket 26; and the second connection end is electrically connected to the transceiver board 213. In the embodiments of the present application, the optical-mechanical bracket 26 can not only serve a uniform heat dissipation function, but can also act as a carrier for the flexible circuit board 214 to adhere and be fixed to, preventing structural interference caused by deformation of the flexible circuit board 214 during operation of the LiDAR 1. The flexible circuit board 214 and the optical-mechanical bracket 26 may be fixedly connected by adhesive bonding or other means, which is not limited herein.

The optical-mechanical bracket 26 comprises a main optical-mechanical bracket 261 and a plurality of mounting seats 262; the mounting seats 262 connect the main optical-mechanical bracket 261 and the lens barrel 25. The main optical-mechanical bracket 261 has sufficient heat dissipation area and can primarily serve to improve the heat dissipation performance of the transceiver board 213. A thermally conductive gel 28 may be provided between the main optical-mechanical bracket 261 and the transceiver board 213. The flexible circuit board 214 may be connected to the main optical-mechanical bracket 261. The mounting seats 262 primarily serve to fix the optical-mechanical bracket 26 to the lens barrel 25.

The optical-mechanical bracket 26 comprises a plurality of mounting seats 262; the plurality of mounting seats 262 are circumferentially spaced apart around the main optical-mechanical bracket 261, making the mounting and fixing of the optical-mechanical bracket 26 more reliable and less prone to tilting. The plurality of mounting seats 262 are distributed as uniformly as possible. A necked portion 263 is formed at the connection position between the mounting seat 262 and the main optical-mechanical bracket 261. The necked portion 263 can serve a crack-arrest function, preventing tearing during processing at the bent location of screw fastening.

The optical-mechanical bracket 26 further comprises a flanged structure 264 located on the side of the main optical-mechanical bracket 261 facing away from the transceiver board 213. The flanged structure 264 can optimize the center of mass of the entire optical-mechanical assembly 20 at the rotation center, optimizing the dynamic balance. The flanged structure 264 is located between two adjacent mounting seats 262 and is spaced apart from the mounting seats 262. The flanged structure 264 is connected to the edge of the main optical-mechanical bracket 261.

Due to structural and hardware limitations, the mounting seats 262 are typically arranged in the edge region of the transceiver board 213, while the transmitter chip 211 and the receiver chip 212 are typically arranged in the central region of the transceiver board 213. Since the transceiver board 213 is integrated, this can easily cause the overall warpage of the transceiver board 213 to increase, resulting in increased positional errors of the transmitter chip 211 and the receiver chip 212 relative to the lenses. Based on this, to improve the warpage of the central region of the transceiver board 213, the central portion of the optical-mechanical bracket 26 (e.g., the main optical-mechanical bracket 261) is raised toward the transceiver board 213 to form a raised portion 265, and the raised portion 265 abuts the transceiver board 213. The raised portion 265 can support the central region of the transceiver board 213, thereby improving the warpage of the central region of the transceiver board 213.

The optical-mechanical bracket 26 further has a relief portion 266. The relief portion 266 may be located at the edge of the optical-mechanical bracket 26 (e.g., the main optical-mechanical bracket 261). In one embodiment, the second connection end of the flexible circuit board 214 passes through the relief portion 266 to be electrically connected to the transceiver board 213.

The optical-mechanical assembly 20 further comprises a fixing block 27. The bend portion 2141 has a bent shape; the first sub-bend portion and the second sub-bend portion together enclose a cavity; the fixing block 27 is located in the cavity; one side of the fixing block 27 is fixedly connected to the first sub-bend portion; and the other side of the fixing block 27 is fixedly connected to the second sub-bend portion. The second sub-bend portion is fixedly connected to the optical-mechanical bracket 26; the fixing block 27 is located in the cavity of the bend portion 2141 and fixedly connected to the flexible circuit board 214. Through the dual constraining action of the fixing block 27 and the optical-mechanical bracket 26, the flexible circuit board 214 is secured, preventing structural interference caused by deformation of the flexible circuit board 214 during operation of the LiDAR 1. The fixing block 27 and the flexible circuit board 214 may be connected by adhesive bonding or other means, which is not limited herein.

The fixing block 27 has a certain degree of elasticity. In this way, when the optical-mechanical assembly 20 is installed within the LiDAR 1, the fixing block 27 can deform to adapt to the space margin inside the LiDAR 1, providing a better fixing effect. The fixing block 27 may be a foam block.

The lens barrel 25 is provided with a partition 259 extending toward the transceiver board 213; the lens barrel 25 forms a transmitter chamber 257 and a receiver chamber 258 on opposite sides of the partition 259, respectively; the transmitter chamber 257 communicates with the transmitter light-passing aperture 251, and the transmitter chip 211 is located in the transmitter chamber 257; the receiver chamber 258 communicates with the receiver light-passing aperture 252, and the receiver chip 212 is located in the receiver chamber 258; and the transceiver board 213 covers both the transmitter chamber 257 and the receiver chamber 258.

The side wall of the lens barrel 25 is formed with a communication opening 250 communicating with the transmitter chamber 257 and/or the receiver chamber 258. The provision of the communication opening 250 allows airflow to enter the lens barrel 25 through the communication opening 250 when the optical-mechanical assembly 20 rotates relative to the base 11, and heat generated by heat-generating components such as the transmitter chip 211 and the receiver chip 212 at the transceiver board 213 can be carried away by convection.

A gap exists between the partition 259 and the transceiver board 213; the gap communicates the transmitter chamber 257 with the receiver chamber 258. In this way, regardless of whether the communication opening 250 communicates with the transmitter chamber 257 or the receiver chamber 258, airflow entering the lens barrel 25 through the communication opening 250 can reach the vicinity of both the transmitter chip 211 and the receiver chip 212, carrying away the heat near them. The communication opening 250 may be a single opening or a plurality of openings at intervals.

In the embodiments of the present application, a single communication opening 250 is provided, so that airflow can enter the lens barrel 25 through the communication opening 250 and also exit the lens barrel 25 through the communication opening 250, enhancing turbulence and improving convective heat transfer.

In the embodiments of the present application, the communication opening 250 is provided on the side of the receiver chamber 258 and communicates with the receiver chamber 258. Combined with the above analysis, since the transmitter chamber 257 and the receiver chamber 258 communicate through the gap, the communication opening 250 communicating with the receiver chamber 258 also allows airflow entering the lens barrel 25 through the communication opening 250 to reach the transmitter chamber 257, carrying away the heat near both the transmitter chip 211 and the receiver chip 212.

It should be noted that the position of the communication opening 250 may be determined by simulation. For example, through stray light simulation near the lens barrel 25, the position of the lens barrel 25 where stray light is almost absent is identified, and the communication opening 250 is placed at that position. Through simulation analysis, almost no stray light exists on the side of the receiver chamber 258 remote from the transmitter chamber 257; therefore, the communication opening 250 is provided on the side of the receiver chamber 258 remote from the transmitter chamber 257 to prevent stray light from entering the lens barrel 25 through the communication opening 250.

It will be appreciated that, in addition to being provided on the lens barrel 25, the communication opening 250 may also be provided on the transceiver board 213. If the board surface space of the transceiver board 213 is sufficient, holes may be drilled on the transceiver board 213 to form the communication opening 250, which is not limited herein. In the embodiments of the present application, the communication opening 250 is provided on the lens barrel 25 rather than the transceiver board 213, which is conducive to the arrangement of circuit structures on the transceiver board 213.

It should be noted that the above gap between the partition 259 and the transceiver board 213 may mean that part of the surface of the partition 259 adjacent to the transceiver board 213 has a gap with the transceiver board 213, while the remaining part of the surface of the partition 259 adjacent to the transceiver board 213 may abut the transceiver board 213. In this way, the portion where the partition 259 abuts the transceiver board 213 can improve the warpage of the central region of the transceiver board 213.

Combined with the above description of the raised portion 265 also abutting the central region of the transceiver board 213, the raised portion 265 and the partition 259 can respectively abut and press the transceiver board 213 on opposite sides, better improving the warpage of the central region of the transceiver board 213. The portion of the partition 259 that abuts the transceiver board 213 may correspond to the portion of the raised portion 265 that abuts the transceiver board 213.

The assembly steps of the optical-mechanical assembly 20 of the embodiments of the present application comprise: Step 1: disposing thermally conductive gel 28 between the transceiver board 213 and the optical-mechanical bracket 26. Step 2: fastening the transceiver board 213 and the optical-mechanical bracket 26 to the lens barrel 25 using locking members. Step 3: bending part of the flexible circuit board 214 and fixing the bend portion 2141 through the fixing block 27. Step 4: electrically connecting the flexible circuit board 214 to the transceiver board 213 and fixing it to the side of the optical-mechanical bracket 26 facing away from the transceiver board 213.

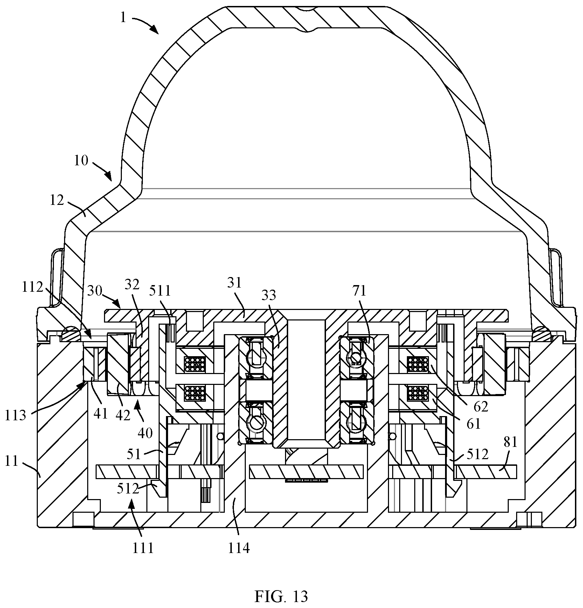

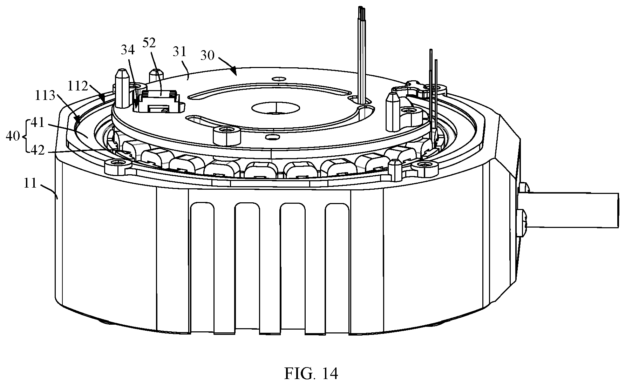

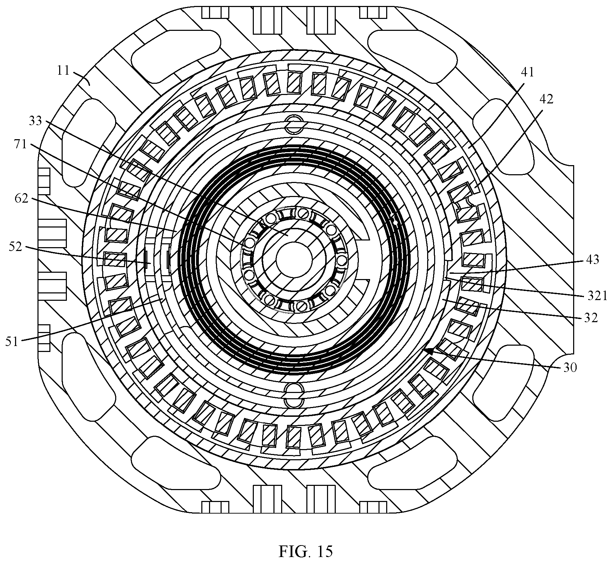

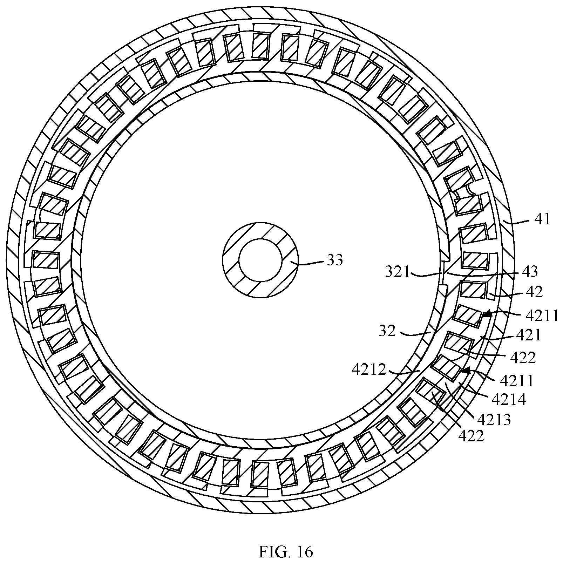

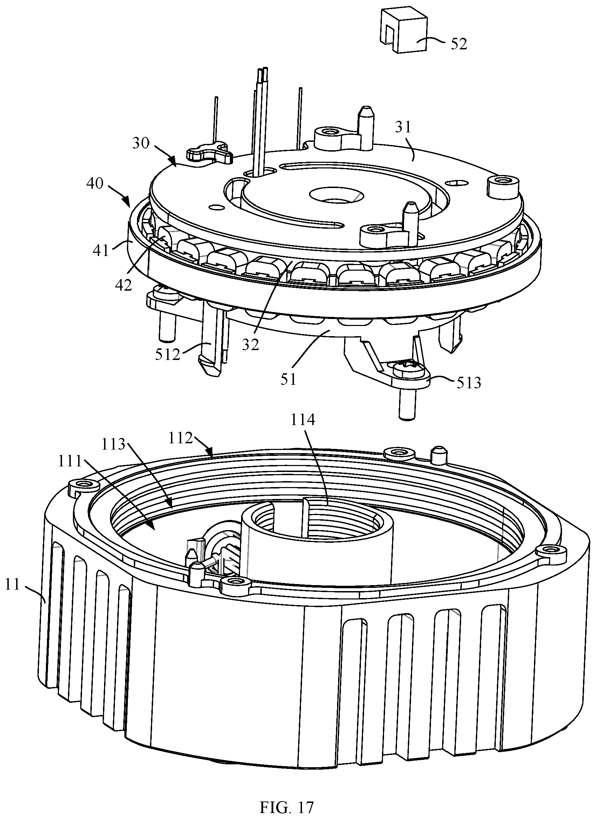

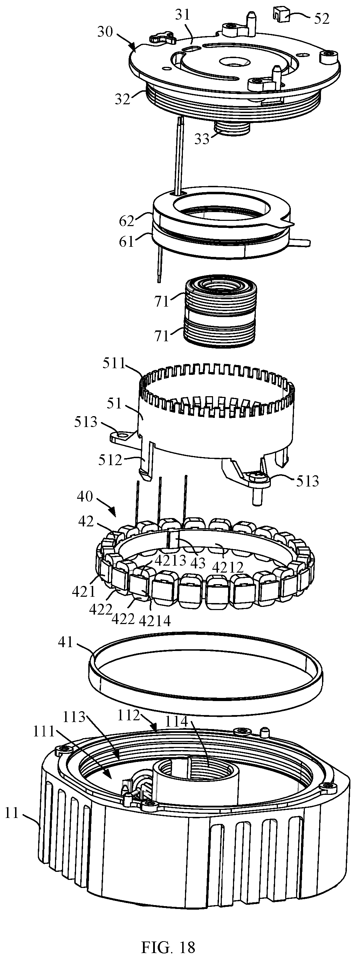

In one embodiment, referring to FIGS. 13 through 18, the heat dissipation bracket 30 is described in detail.

The heat dissipation bracket 30 is located within the housing 10, and the optical-mechanical assembly 20 is mounted on the heat dissipation bracket 30. The heat dissipation bracket 30 can be used for carrying the optical-mechanical assembly 20 and the main board 82, improving the heat dissipation efficiency during operation of the optical-mechanical assembly 20. The main board 82 is located within the housing 10 and mounted between the optical-mechanical assembly 20 and the heat dissipation bracket 30; the optical-mechanical assembly 20 is mounted on the heat dissipation bracket 30. The first connection end of the flexible circuit board 214 is electrically connected to the main board 82, and the second connection end of the flexible circuit board 214 is electrically connected to the transceiver board 213. The main board 82 is disposed adjacent to the heat dissipation bracket 30, so that the heat dissipation bracket 30 can improve the heat dissipation efficiency of the main board 82 during operation of the optical-mechanical assembly 20, ensuring the operational performance and service life of the main board 82. The main board 82 is located between the optical-mechanical assembly 20 and the heat dissipation bracket 30, so that when the optical-mechanical assembly 20 and the heat dissipation bracket 30 are assembled and fixed, the main board 82 can be pressed and secured, eliminating the need for additional installation and fixation of the main board 82 and reducing installation costs. A thermally conductive gel is disposed between the main board 82 and the heat dissipation bracket 30. The thermally conductive gel can improve the heat transfer efficiency between the main board 82 and the heat dissipation bracket 30.

In some embodiments, the optical-mechanical assembly 20 and the heat dissipation bracket 30 may be assembled and fixed by a locking member. Specifically, the optical-mechanical assembly 20 is formed with a first mounting hole and the heat dissipation bracket 30 is formed with a second mounting hole; a locking member passes through the first mounting hole and the second mounting hole to achieve assembly and fixation of the optical-mechanical assembly 20 and the heat dissipation bracket 30. The locking member may comprise a bolt, or may comprise a bolt and a nut used together with the bolt, which is not limited herein.

In some embodiments, the locking member may avoid the main board 82 in assembling and fixing the optical-mechanical assembly 20 to the heat dissipation bracket 30. In other embodiments, the locking member may pass through the third mounting hole on the main board 82 to assemble and fix the optical-mechanical assembly 20 to the heat dissipation bracket 30.

In one embodiment, the optical-mechanical assembly 20 is mounted on the heat dissipation bracket 30, which may be realized by mounting the lens barrel 25 on the heat dissipation bracket 30. Specifically, the lens barrel 25 may be mounted on the heat dissipation bracket 30 by the aforementioned locking member, which will not be repeated here. The heat dissipation bracket 30 comprises a first main bracket 31 and a side bracket 32; the side bracket 32 is connected to the first main bracket 31 and extends away from the first main bracket 31. The optical-mechanical assembly 20 is mounted on the first main bracket 31. The first main bracket 31 may be substantially plate-shaped. The first main bracket 31 may be arranged opposite to the main board 82 to provide a larger bearing area. The side bracket 32 is located on the side of the optical-mechanical assembly 20 remote from the first main bracket 31. The side bracket 32 is arranged around the rotation axis of the optical-mechanical assembly 20. The heat dissipation bracket 30 (e.g., the side bracket 32) is formed with a positioning portion 321. The heat dissipation bracket 30 further comprises a rotating shaft 33; the rotating shaft 33 is connected to the first main bracket 31 and extends away from the first main bracket 31. At least part of the rotating shaft 33 extends into the sleeve 114 inside the base 11, achieving assembly positioning between the heat dissipation bracket 30 and the base 11. The rotation axis of the heat dissipation bracket 30 rotating relative to the base 11 under the drive of the driving member 40 may be along the central axis of the rotating shaft 33.

When the heat dissipation bracket 30 rotates relative to the base 11, the rotating shaft 33 rotates inside the sleeve 114. A bearing 71 may be provided between the rotating shaft 33 and the sleeve 114; the inner ring of the bearing 71 is fixedly fitted onto the rotating shaft 33, and the outer ring of the bearing 71 is fixedly embedded in the sleeve 114, ensuring smooth rotation between the rotating shaft 33 and the sleeve 114.

In some embodiments, along the central axis direction of the rotating shaft 33, one or more bearings 71 may be provided between the rotating shaft 33 and the sleeve 114, which is not limited in the embodiments of the present application.

In one embodiment, the bearing 71 may be directly bonded and fixed to the sleeve 114 and the rotating shaft 33, which can save bracket components. The rotating shaft 33 and the side bracket 32 are located on the same side of the first main bracket 31. For example, both the rotating shaft 33 and the side bracket 32 are located on the side of the first main bracket 31 closer to the inner bottom wall of the base 11. The rotating shaft 33 may correspond substantially to the middle portion of the first main bracket 31, and the side bracket 32 may correspond substantially to the edge portion of the first main bracket 31. The side bracket 32 may be arranged around the periphery of the rotating shaft 33. The rotating shaft 33 may be hollow inside to reduce the manufacturing cost of the LiDAR 1.

In one embodiment, referring to FIGS. 13 through 18, the driving member 40 is described in detail. The driving member 40 comprises a magnetic member 41 and an electromagnetic winding 42; the magnetic member 41 and the electromagnetic winding 42 cooperate to drive the heat dissipation bracket 30 to rotate relative to the base 11, thereby achieving rotation of the optical-mechanical assembly 20 relative to the base 11. Specifically, the electromagnetic winding 42 may be periodically energized to change the magnetic field around the electromagnetic winding 42, achieving the purpose of driving the heat dissipation bracket 30 to rotate relative to the base 11. For example, the magnetic member 41 generates a constant magnetic field; when the direction and/or magnitude of the current in the coil of the electromagnetic winding 42 changes, a varying magnetic field is generated around the electromagnetic winding 42; the interaction between this varying magnetic field and the constant magnetic field can drive relative movement between the electromagnetic winding 42 and the magnetic member 41, thereby driving relative movement between the heat dissipation bracket 30 and the base 11.

The magnetic member 41 is mounted on one of the base 11 and the heat dissipation bracket 30, and the electromagnetic winding 42 is mounted on the other of the base 11 and the heat dissipation bracket 30. Mounting the magnetic member 41 directly on one of the base 11 and the heat dissipation bracket 30, and the electromagnetic winding 42 directly on the other, compared with the related art in which the magnetic member and electromagnetic winding are each mounted on the base and the optical-mechanical assembly through separate brackets, can save the bracket structures, reducing the manufacturing cost of the LiDAR 1. Moreover, the optical-mechanical assembly 20 and the magnetic member 41/electromagnetic winding 42 are both mounted on the heat dissipation bracket 30, enabling the heat dissipation bracket 30 to both improve the heat dissipation efficiency of the optical-mechanical assembly 20 during use and provide a mounting carrier for the magnetic member 41/electromagnetic winding 42; i.e., the heat dissipation bracket 30 is reused in the embodiments of the present application, which can reduce the manufacturing cost of the LiDAR 1.

In summary, one of the magnetic member 41 and the electromagnetic winding 42 mounted on the base 11 is directly mounted on the base 11, eliminating one mounting bracket; the one of the magnetic member 41 and the electromagnetic winding 42 mounted on the heat dissipation bracket 30 is directly mounted by reusing the heat dissipation bracket 30 of the optical-mechanical assembly 20, also eliminating one mounting bracket; thus, the manufacturing cost of the LiDAR 1 can be greatly reduced.

One of the magnetic member 41 and the electromagnetic winding 42 mounted on the base 11 may be placed on the step face of the step 113 of the base 11. In this way, when installing one of the magnetic member 41 and the electromagnetic winding 42 on the housing 10, it can be placed from the opening 112 of the base 11 into the step 113 and placed on the step face of the step 113; the installation method is simple, and the process of forming the step 113 on the housing 10 is mature, making it convenient to manufacture.

The bottom wall of one of the magnetic member 41 and the electromagnetic winding 42 may be entirely placed on the step face, or may be partially placed on the step face. For example, the outer peripheral part of the bottom wall of one of the magnetic member 41 and the electromagnetic winding 42 is placed on the step face, while the inner peripheral part is suspended.

The other of the magnetic member 41 and the electromagnetic winding 42 mounted on the heat dissipation bracket 30 may be the other of the magnetic member 41 and the electromagnetic winding 42 mounted on the side bracket 32. The side bracket 32 is located on the side of the optical-mechanical assembly 20 remote from the first main bracket 31. In this way, the optical-mechanical assembly 20 and the magnetic member 41/electromagnetic winding 42 mounted on the side bracket 32 can be located on opposite sides of the first main bracket 31, respectively, without interfering with each other, achieving optimized spatial layout within the LiDAR 1. The side bracket 32 is arranged around the rotation axis of the optical-mechanical assembly 20. In this way, the side bracket 32 is substantially cylindrical in structure, which provides a larger mounting area for the magnetic member 41/electromagnetic winding 42 compared to a block structure.

The side bracket 32 is formed with a positioning portion 321; the one of the magnetic member 41 and the electromagnetic winding 42 fixed relative to the heat dissipation bracket 30 is provided with a positioning-fit portion 43; and the positioning portion 321 is connected to the positioning-fit portion 43. The provision of the positioning portion 321 and the positioning-fit portion 43 facilitates positioning of the installation of the heat dissipation bracket 30 and the magnetic member 41/electromagnetic winding 42, improving the mounting accuracy of the magnetic member 41/electromagnetic winding 42 on the heat dissipation bracket 30.

In some embodiments, one of the positioning portion 321 and the positioning-fit portion 43 is a positioning groove, and the other is a positioning protrusion; at least part of the positioning protrusion extends into the positioning groove. The formation and assembly of the positioning protrusion and the positioning groove are relatively convenient.

In some embodiments, the positioning portion 321 is a positioning groove and the positioning-fit portion 43 is a positioning protrusion, i.e., the heat dissipation bracket 30 is provided with a positioning groove and the magnetic member 41/electromagnetic winding 42 is provided with a positioning protrusion. In other embodiments, the positioning portion 321 is a positioning protrusion and the positioning-fit portion 43 is a positioning groove, i.e., the heat dissipation bracket 30 is provided with a positioning protrusion and the magnetic member 41/electromagnetic winding 42 is provided with a positioning groove.

The magnetic member 41 is arranged around the rotation axis of the optical-mechanical assembly 20, and the electromagnetic winding 42 is arranged around the rotation axis of the optical-mechanical assembly 20. That is, the magnetic member 41 is an annular member and the electromagnetic winding 42 is an annular member. An annular member is more convenient to assemble compared to a plurality of independent block-shaped members.

If the magnetic member 41 is arranged around the rotation axis of the optical-mechanical assembly 20, the electromagnetic winding 42 is arranged around the rotation axis of the optical-mechanical assembly 20, the step 113 is also arranged around the rotation axis of the optical-mechanical assembly 20, and the side bracket 32 is also arranged around the rotation axis of the optical-mechanical assembly 20, then the step 113 is an annular step whose step face is a circular ring surface, so as to bear the annular magnetic member 41/electromagnetic winding 42. The side bracket 32 is substantially cylindrical in structure, so that the magnetic member 41/electromagnetic winding 42 may be sleeved on the side bracket 32 and connected to the side bracket 32 by interference fit or other means, which is not limited herein.

The above arrangement in which the magnetic member 41 is mounted on one of the base 11 and the heat dissipation bracket 30 and the electromagnetic winding 42 is mounted on the other of the base 11 and the heat dissipation bracket 30 may be: the magnetic member 41 is mounted on the base 11 and the electromagnetic winding 42 is mounted on the heat dissipation bracket 30; or the magnetic member 41 is mounted on the heat dissipation bracket 30 and the electromagnetic winding 42 is mounted on the base 11.

In the embodiments of the present application, the magnetic member 41 is mounted on the base 11 and the electromagnetic winding 42 is mounted on the heat dissipation bracket 30. That is, during operation of the LiDAR 1, the magnetic member 41 remains stationary relative to the base 11, while the electromagnetic winding 42 rotates with the heat dissipation bracket 30 relative to the base 11.

If the electromagnetic winding 42 is mounted on the heat dissipation bracket 30, the electromagnetic winding 42 is electrically connected to the main board 82. Since both the electromagnetic winding 42 and the optical-mechanical assembly 20 are mounted on the heat dissipation bracket 30, during operation of the LiDAR 1, the electromagnetic winding 42 and the optical-mechanical assembly 20 can rotate synchronously relative to the base 11, remaining stationary relative to each other; thus, designing the electromagnetic winding 42 to be electrically connected to the main board 82 can avoid the wire-winding problem during rotation.

Moreover, electrically connecting the electromagnetic winding 42 to the main board 82, compared with separately providing a circuit board electrically connected to the electromagnetic winding, can save the circuit board, reducing the manufacturing cost of the LiDAR 1.

The electromagnetic winding 42 comprises an iron core 421 and a plurality of coils 422. The iron core 421 has mounting positions 4211; the coils 422 are wound around the mounting positions 4211 in a one-to-one correspondence. The plurality of mounting positions 4211 in the electromagnetic winding 42 are equally spaced, so that when the electromagnetic winding 42 and the magnetic member 41 interact with each other, the magnetic forces generated at each part are substantially equal. The equal spacing of the plurality of mounting positions 4211 comprehensively considers magnetic flux and driving force magnitude, improving stability during rotation. Under the premise of ensuring driving effect, by appropriately increasing the number of teeth or the number of coils 422, the height at the coil end can be reduced; moreover, by increasing the number of teeth to improve the primary order of cogging torque, the cogging torque can be reduced and point cloud stability can be improved.

The above arrangement in which the electromagnetic winding 42 is arranged around the rotation axis of the optical-mechanical assembly 20 may mean that the iron core 421 is arranged around the rotation axis of the optical-mechanical assembly 20, and the plurality of mounting positions 4211 are spaced apart around the rotation axis of the optical-mechanical assembly 20.

The stator iron core, i.e., the iron core 421, comprises a yoke portion 4212 and a plurality of tooth portions 4213; the yoke portion 4212 is used for mounting on the heat dissipation bracket 30 or the base 11. The plurality of tooth portions 4213 are circumferentially spaced apart along the yoke portion 4212; one end of each tooth portion 4213 is connected to the yoke portion 4212, and the other end extends away from the yoke portion 4212. The outer periphery of each tooth portion 4213 forms a mounting position 4211, and the coils 422 are wound around the tooth portions 4213 in a one-to-one correspondence.

If the iron core 421 is arranged around the rotation axis of the optical-mechanical assembly 20, the tooth portions 4213 may be located on the inner side or the outer side of the iron core 421. If the electromagnetic winding 42 is mounted on the heat dissipation bracket 30, the tooth portions 4213 of the iron core 421 are located on the outer side of the iron core 421, so that the iron core 421 can be connected to the heat dissipation bracket 30 through the yoke portion 4212 with a larger connection area and more reliable connection.

If the electromagnetic winding 42 is mounted on the heat dissipation bracket 30, the yoke portion 4212 of the electromagnetic winding 42 is sleeved on the side bracket 32 of the heat dissipation bracket 30 and mounted on the side bracket 32. The yoke portion 4212 and the side bracket 32 may be connected by interference fit or other means, which is not limited herein. The yoke portion 4212 may be provided with the positioning-fit portion 43, and the side bracket 32 may be provided with the positioning portion 321.

The iron core 421 further comprises a tooth tip 4214; the tooth tip 4214 is connected to the side of the tooth portion 4213 remote from the yoke portion 4212 and protrudes from the tooth portion 4213 along the circumferential direction of the yoke portion 4212. The provision of the tooth tip 4214 can constrain the coils 422 wound on the tooth portions 4213, preventing the coils 422 from falling off the tooth portions 4213.

In one embodiment, referring to FIGS. 13 through 18, the LiDAR 1 is described in detail. The LiDAR 1 further comprises a power supply board 81 located within the housing 10, for supplying power to electrical components within the LiDAR 1. The electrical components include the optical-mechanical assembly 20, the main board 82, the electromagnetic winding 42, and others. The power supply board 81 is fixed relative to the base 11; i.e., during operation of the LiDAR 1, the power supply board 81 remains stationary together with the base 11. The power supply board 81 and the main board 82 are located on opposite sides of the heat dissipation bracket 30. In this way, the distance between the power supply board 81 and the main board 82 can be increased, which is conducive to improving the heat dissipation performance of the LiDAR 1.

The LiDAR 1 further comprises a wireless charging module located within the housing 10. The wireless charging module comprises a wireless charging transmitter unit 61 and a wireless charging receiver unit 62; the wireless charging transmitter unit 61 is fixed relative to the base 11 and electrically connected to the power supply board 81; the wireless charging receiver unit 62 is fixed relative to the heat dissipation bracket 30 and electrically connected to the main board 82. In this way, the power supply board 81 can wirelessly transmit electrical signals to the main board 82 through the wireless charging transmitter unit 61 and the wireless charging receiver unit 62, without wired electrical connection, avoiding the wire-winding problem during rotation of the main board 82 relative to the base 11.

In some embodiments, the wireless charging transmitter unit 61 and the wireless charging receiver unit 62 are disposed opposite each other in the height direction of the LiDAR 1. This is conducive to compressing the dimensions of the LiDAR 1 in the height direction.

In some embodiments, the wireless charging transmitter unit 61 and the wireless charging receiver unit 62 are located between the code disc 51 (described in further detail below) and the sleeve 114 of the base 11. This is conducive to compressing the dimensions of the LiDAR 1 in the height direction.

In some embodiments, the wireless charging transmitter unit 61 is mounted on the code disc 51 (in this case, the code disc 51 is fixed relative to the base 11, as described in further detail below), and the wireless charging receiver unit 62 is mounted on the heat dissipation bracket 30. The wireless charging transmitter unit 61 may be mounted on the code disc 51 by adhesive bonding or other means; the wireless charging receiver unit 62 may be mounted on the heat dissipation bracket 30 by adhesive bonding or other means.

The provision of the wireless charging module can further reduce the overall power consumption of the device, prevent excessively high internal temperature, further reduce the temperature of the optical-mechanical assembly 20, and improve the feasibility of plasticizing the lens barrel. The charging magnetic ring of the wireless charging module is made of injection-molded ferrite material, avoiding the sintered ferrite process which has low production efficiency, poor yield, and poor accuracy, thereby further reducing costs.

The LiDAR 1 further comprises a code disc 51 and a photoelectric switch 52. The code disc 51 is fixed relative to one of the base 11 and the heat dissipation bracket 30; the code disc 51 is provided with a plurality of detection portions 511 along the circumferential direction. The photoelectric switch 52 is fixed relative to the other of the base 11 and the heat dissipation bracket 30; when the heat dissipation bracket 30 rotates relative to the base 11, the photoelectric switch 52 successively corresponds to the plurality of detection portions 511. The code disc 51 and the photoelectric switch 52 cooperate and can be used for angular displacement measurement, counting, positioning, and other purposes, which are not limited herein.

In some embodiments, the photoelectric switch 52 may comprise a transmitter portion and a receiver portion that are spaced apart; the photoelectric switch 52 successively corresponding to the plurality of detection portions 511 may mean that the transmitter portion and the receiver portion of the photoelectric switch 52 pass through each detection portion 511 in turn. When a detection portion 511 corresponds to the space between the transmitter portion and the receiver portion, light emitted by the transmitter portion cannot be received by the receiver portion; when the gap between two adjacent detection portions 511 corresponds to the space between the transmitter portion and the receiver portion, light emitted by the transmitter portion is not blocked by the detection portions 511 and can be received by the receiver portion; accordingly, the photoelectric switch 52 can count the number of detection portions 511 on the code disc 51 passing between the transmitter portion and the receiver portion within a period of time and thereby determine the angle rotated by the code disc 51, achieving angular displacement measurement. For example, when the angle between the lines connecting the centers of two adjacent detection portions 511 on the code disc 51 to the rotation center of the code disc 51 is 1°, if the photoelectric switch 52 counts two detection portions 511 on the code disc 51 passing between the transmitter portion and the receiver portion within one minute, the angle rotated by the code disc 51 is approximately greater than 1° and less than 3°. By increasing the number of detection portions 511 on the code disc 51 and reducing the angle between adjacent detection portions 511, the detection accuracy of the photoelectric switch 52 can be improved.

The above arrangement in which the code disc 51 is fixed relative to one of the base 11 and the heat dissipation bracket 30 and the photoelectric switch 52 is fixed relative to the other of the base 11 and the heat dissipation bracket 30 may be: the code disc 51 is fixed relative to the base 11 and the photoelectric switch 52 is fixed relative to the heat dissipation bracket 30; or the code disc 51 is fixed relative to the heat dissipation bracket 30 and the photoelectric switch 52 is fixed relative to the base 11.

In the embodiments of the present application, the code disc 51 is fixed relative to the base 11 and the photoelectric switch 52 is fixed relative to the heat dissipation bracket 30. That is, during operation of the LiDAR 1, the code disc 51 remains stationary relative to the base 11, while the photoelectric switch 52 rotates with the heat dissipation bracket 30 relative to the base 11.

If the code disc 51 is fixed relative to the base 11, the code disc 51 may be provided with a fixing seat 513, and the inner bottom wall of the base 11 may be provided with a protruding fixing boss; the fixing seat 513 and the fixing boss may be fixed by a locking member. By providing a fixing boss on the inner bottom wall of the base 11 to achieve fixation of the code disc 51, holes in the base 11 can be avoided, ensuring the sealing performance and structural strength of the housing 10. Specifically, the code disc 51 is formed with a fourth mounting hole, and the fixing boss on the base 11 is formed with a fifth mounting hole; a locking member passes through the fourth mounting hole and the fifth mounting hole to achieve assembly and fixation of the code disc 51 and the base 11. The locking member may comprise a bolt; the fifth mounting hole on the fixing boss may be provided with an internal thread to engage with the bolt by threaded connection.

If the photoelectric switch 52 is fixed relative to the heat dissipation bracket 30, the photoelectric switch 52 is electrically connected to the main board 82; compared with separately providing a circuit board for electrical connection of the photoelectric switch, this can save the circuit board, reducing the manufacturing cost of the LiDAR 1.

The code disc 51 is located on the side of the heat dissipation bracket 30 closer to the inner bottom wall of the base 11; the heat dissipation bracket 30 may be provided with a through-hole 34; the photoelectric switch 52 passes through the through-hole 34 to be electrically connected to the main board 82 and to correspond to the detection portions 511 on the code disc 51.

The power supply board 81 is located between the code disc 51 and the inner bottom wall of the base 11. In this way, when the code disc 51 and the base 11 are assembled and fixed, the power supply board 81 can be pressed and secured, eliminating the need for additional installation and fixation of the power supply board 81 and reducing installation costs.

In some embodiments, the locking member connecting the code disc 51 and the base 11 may avoid the power supply board 81 in assembling and fixing the code disc 51 to the base 11. In other embodiments, the locking member connecting the code disc 51 and the base 11 may pass through the sixth mounting hole on the power supply board 81 to assemble and fix the code disc 51 to the base 11.

The code disc 51 is provided with positioning hooks 512; the positioning hooks 512 hook onto the power supply board 81. In this way, while fixing the power supply board 81, the code disc 51 can be pressed at the same time, reducing the use of fasteners and lowering costs.

In addition, embodiments of the present application further provide a transceiver module and LiDAR thereof; the following provides a detailed description of its specific structure and embodiments in conjunction with the drawings.

With the widespread application of LiDAR in the fields of robotics, autonomous driving, and other areas, the requirements for miniaturization, lightweight, and low-cost are increasingly strong. Designs that eliminate optical adjustment between the lens and circuit board to achieve low-cost requirements, as well as integrated transceiver circuit board designs to achieve miniaturization requirements, are both development trends.

In the related art, circuit boards of LiDAR carry a large number of electronic components; for example, both transmitter chips and receiver chips are disposed on the circuit board, which generally have a certain weight, causing the weight of the region provided with the transmitter chips and receiver chips to be significantly greater than other regions. This uneven weight distribution causes the circuit board to bend and deform under gravity, thereby increasing warpage. If the transmitter chips and receiver chips are placed adjacent to or near each other, the weight and heat in the local region become excessively concentrated. On one hand, the difference in deformation between the region of concentrated weight and the surrounding regions causes warpage; on the other hand, concentrated heat causes uneven local thermal expansion, further aggravating warpage of the circuit board.

During the manufacturing process of the circuit board, processes such as lamination, etching, and drilling generate internal stresses. During the lamination process, the boards are bonded under high temperature and high pressure; if the pressure is uneven or the temperature is not properly controlled, the internal stress distribution within the circuit board may become uneven, resulting in warpage. During the etching process, if the degree of chemical corrosion is inconsistent, the structural strength of the circuit board after copper foil removal is uneven, creating stress concentration points and causing warpage.

In addition, in actual use, the LiDAR may be subjected to vibrations, impacts, and other external forces; the circuit board itself has relatively weak resistance to vibration and impact, and is prone to large deformation under external forces, leading to increased warpage.

All of the above factors can cause increased warpage of the circuit board, resulting in increased positional errors of the transmitter chips or receiver chips disposed on the circuit board relative to the lenses, affecting the ranging performance of the LiDAR.

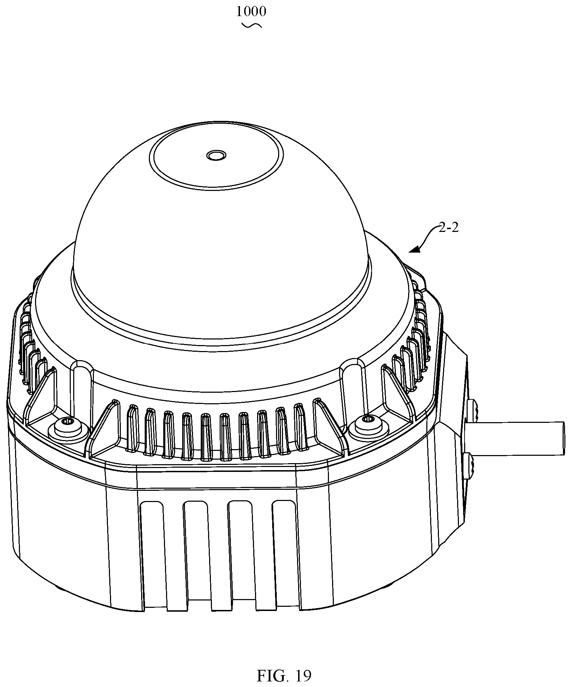

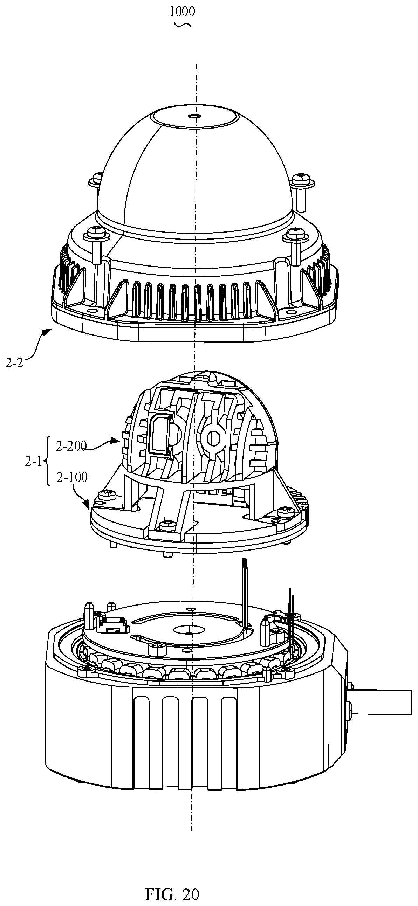

In one embodiment, referring to FIGS. 19 through 21, the present application discloses a LiDAR 1000. The LiDAR 1000 may be applied in fields such as autonomous driving vehicles, robot navigation, and drone applications. The LiDAR 1000 comprises a housing 2-2 and a transceiver module 2-1.

The transceiver module 2-1 is disposed within the housing 2-2, so that the housing 2-2 provides protection for the transceiver module 2-1. The housing 2-2 is made of a high-strength, corrosion-resistant material to ensure the LiDAR 1000 maintains operational stability in various harsh environments. To prevent moisture, dust, and other contaminants from entering the interior of the LiDAR 1000, the housing 2-2 needs to have good sealing performance. For example, welded breathable membrane technology may be used to achieve dust-proof and waterproof performance of the housing 2-2. In addition, since the transceiver module 2-1 generates a certain amount of heat during operation, heat dissipation performance needs to be considered in the design of the housing 2-2 to ensure the transceiver module 2-1 can operate stably even in high-temperature environments.

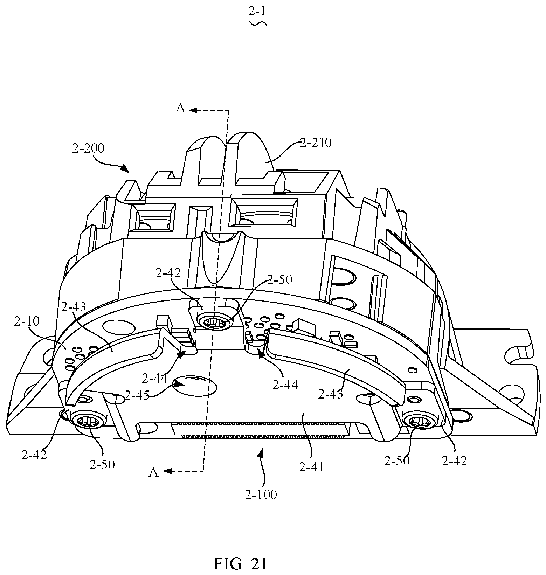

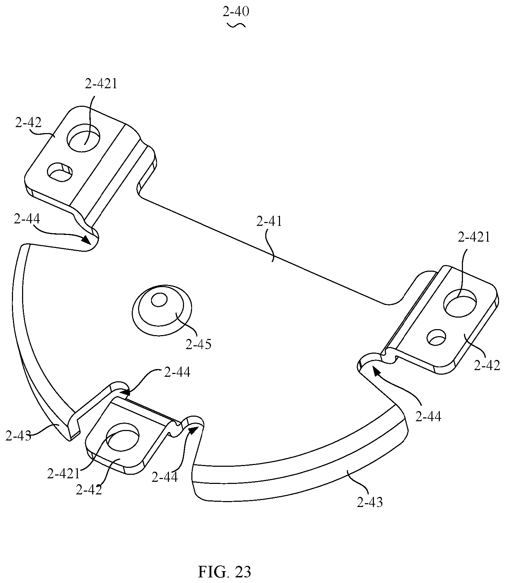

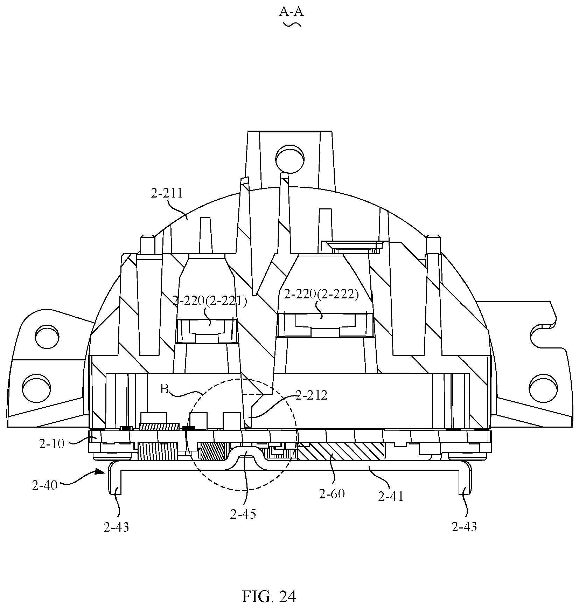

In some embodiments, the transceiver module 2-1 comprises a transceiver circuit board 2-100 and a lens module 2-200; the lens module 2-200 comprises a lens barrel 2-210 and lenses 2-220 disposed on the lens barrel 2-210; as shown in FIG. 24, the lenses 2-220 comprise a transmitter lens 2-221 and a receiver lens 2-222. Referring to FIGS. 21 through 23, the transceiver module 2-1 further comprises a reinforcing member 2-40 and a plurality of spaced-apart fasteners 2-50. The transceiver circuit board 2-100 comprises a substrate 2-10, a transmitter chip 2-20, and a receiver chip 2-30; both the transmitter chip 2-20 and the receiver chip 2-30 are electrically connected to the substrate 2-10; the transmitter chip 2-20 is located on the light-incident side of the transmitter lens 2-221, and the receiver chip 2-30 is located on the light-exiting side of the receiver lens 2-222.

The substrate 2-10 comprises a first side and a second side disposed opposite each other; the first side faces the lens barrel 2-210; both the transmitter chip 2-20 and the receiver chip 2-30 are mounted on the first side of the substrate 2-10, so that the transmitting optical path and the receiving optical path can be designed and arranged on the same plane of the substrate 2-10, facilitating alignment and adjustment of the optical axis, reducing the complexity of the optical path, and improving the consistency and stability of the optical paths. For example, by placing the transmitter chip 2-20 and the receiver chip 2-30 on the same side, a reflective or transmissive optical system can be more conveniently adopted, enabling part of the optical elements to be shared for light emission and reception, thereby simplifying the optical path structure, reducing the difficulty and cost of optical path design.

Both the transmitter chip 2-20 and the receiver chip 2-30 are mounted on the same side of the substrate 2-10; this layout can also more effectively utilize the space of the substrate 2-10, avoiding the additional space required when placing the transmitter chip 2-20 and the receiver chip 2-30 on opposite sides. For the LiDAR 1000 that pursues miniaturization, transmitter chip 2-20 and receiver chip 2-30 as well as related electronic components can be accommodated in a more compact space, facilitating miniaturization and lightweight of the entire LiDAR 1000 and providing more possibilities for the widespread application of the LiDAR 1000 in fields such as autonomous driving and robotics, particularly with obvious advantages in space-constrained scenarios.

The reinforcing member 2-40 is mounted on the second side of the substrate 2-10, with the substrate 2-10 located between the reinforcing member 2-40 and the lens barrel 2-210. The transceiver circuit board 2-100 of the present application provides uniform support force for the substrate 2-10 through the provision of the reinforcing member 2-40. The reinforcing member 2-40 can offset deformation stress of the substrate 2-10 caused by the weight, heat, or other factors of the transmitter chip 2-20 and the receiver chip 2-30. This uniform support force helps maintain the flatness of the substrate 2-10 and reduces warpage. The reinforcing member 2-40 also reduces bending deformation of the substrate 2-10 when subjected to external forces. During operation of the LiDAR 1000, the reinforcing member 2-40 mounted on the substrate 2-10 can effectively reduce the deformation effect of mechanical vibration, impact, and other external forces on the substrate 2-10; the reinforcing member 2-40 can effectively enhance the bending resistance of the substrate 2-10, ensuring stability and reliability of the substrate 2-10 in complex use environments.

In one embodiment, the fastener 2-50 is a screw; the substrate 2-10 comprises a plurality of first screw holes 2-11; the lens barrel 2-210 (lens barrel body 2-211) comprises a plurality of second screw holes (not shown); and the reinforcing member 2-40 comprises a plurality of third screw holes 2-421; wherein one fastener 2-50 passes through one third screw hole 2-421, one first screw hole 2-11, and one second screw hole in sequence.

The fastener 2-50 connects the reinforcing member 2-40, the substrate 2-10, and the lens barrel 2-210 to fix the reinforcing member 2-40 to the substrate 2-10; the reinforcing member 2-40 and the substrate 2-10 are closely connected together through the fastener 2-50, ensuring no relative displacement between the reinforcing member 2-40 and the substrate 2-10, so that the reinforcing member 2-40 can effectively transmit stress throughout the entire substrate 2-10 structure, enhancing the overall strength of the substrate 2-10. When the substrate 2-10 is subjected to external forces or internal stresses, the fastener 2-50 can distribute these stresses to the connection portions of the reinforcing member 2-40 and the substrate 2-10, preventing substrate 2-10 damage or deformation caused by localized stress concentration, reducing the risk of fatigue failure caused by stress concentration, thereby reducing the warpage of the substrate 2-10.

By reducing the warpage of the substrate 2-10, the positional errors of the transmitter chip 2-20 and the receiver chip 2-30 relative to the lenses 2-220 are reduced. In the LiDAR 1000, the positional accuracy of the transmitter chip 2-20 and the receiver chip 2-30 relative to the lenses 2-220 is crucial for ranging performance; excessively large positional errors cause optical path deviations, affecting ranging accuracy and reliability. By reducing the warpage of the substrate 2-10, the relative positional accuracy of the transmitter chip 2-20 and the receiver chip 2-30 with the lenses 2-220 can be ensured, improving optical path alignment accuracy.

Reducing the warpage of the substrate 2-10 helps stabilize the optical performance of the LiDAR 1000. Reduction of warpage can reduce light-spot distortion and optical energy loss caused by substrate 2-10 deformation, ensuring the quality and intensity of laser light emitted by the transmitter chip 2-20 and echo light received by the receiver chip 2-30, thereby improving the ranging performance and stability of the LiDAR 1000.

In some embodiments, the reinforcing member 2-40 may be made of a material with good thermal conductivity and high material strength; for example, the reinforcing member 2-40 may be made of a metal material such as aluminum alloy, or may be made of a plastic material. The close contact between the reinforcing member 2-40 and the substrate 2-10 can provide an additional heat dissipation path for heat generated by the transmitter chip 2-20 and the receiver chip 2-30, conducting heat from the substrate 2-10 to the reinforcing member 2-40, and then dissipating it to the surrounding environment through the reinforcing member 2-40, thereby improving the overall heat dissipation efficiency of the substrate 2-10.

The excellent heat dissipation performance of the reinforcing member 2-40 can effectively reduce the operating temperature of the substrate 2-10 and distribute temperature more uniformly across the substrate 2-10, reducing temperature differences between different regions of the substrate 2-10 and thereby reducing warpage stress caused by different degrees of thermal expansion in different regions. Even if the substrate 2-10 material itself has a certain coefficient of thermal expansion, the heat dissipation effect of the reinforcing member 2-40 can indirectly reduce the effect of thermal expansion on the warpage of the substrate 2-10 by reducing the temperature variation range. Meanwhile, the fastener 2-50 can also prevent the substrate 2-10 from freely expanding or contracting with temperature changes, thereby reducing substrate 2-10 warpage.

In some embodiments, the number of fasteners 2-50 is at least three, and the plurality of fasteners 2-50 are uniformly distributed. For example, the distance between the centers of any two adjacent first screw holes is equal; or the distance between the centers of any two adjacent third screw holes is equal. The uniform arrangement of the plurality of fasteners 2-50 on the substrate 2-10 can ensure that the substrate 2-10 is subjected to uniform force during fixation; each fastener 2-50 bears a relatively small and equal share of the force, avoiding deformation caused by excessive localized forces and reducing stress concentration. Uniform force distribution helps maintain the flatness of the substrate 2-10 and reduces warpage stress caused by uneven forces.

The uniformly arranged fasteners 2-50 can enhance the structural stability of the substrate 2-10. When subjected to external forces or temperature changes, the uniformly distributed fasteners 2-50 can better maintain the shape of the substrate 2-10, reducing warpage caused by structural instability. The substrate 2-10 may be circular, square, or other irregular shapes; for substrates 2-10 of different shapes, uniformly arranged fasteners 2-50 can better adapt to their geometric characteristics, thereby effectively reducing warpage. For example, for a circular substrate 2-10, uniformly distributed fasteners 2-50 can ensure consistent forces in all directions, while for a square substrate 2-10, uniformly arranged fasteners 2-50 can avoid warpage caused by uneven forces in the diagonal direction.

When the substrate 2-10 is provided with a plurality of electronic components, the positions on the substrate 2-10 available for arranging the plurality of fasteners 2-50 are limited; within the constraint of the available area of the substrate 2-10, the more uniformly arranged fasteners 2-50 there are, generally the better the improvement effect on warpage. More fasteners 2-50 can provide more support points, further distributing stress, improving the flatness of the substrate 2-10, and reducing warpage of the substrate 2-10; therefore, the number of fasteners 2-50 is at least three, i.e., the number may be 4, 5, 7, 8, or the like, and the present application does not specifically limit the number of fasteners 2-50.

According to the definition of warpage, warpage = warpage amount / maximum span of fixing points, where the maximum span refers to the maximum distance between two fasteners 2-50 connected on the substrate 2-10, and the warpage amount refers to the height difference of a position relative to an ideal plane (i.e., the plane on which the substrate 2-10 lies when not warped) when the substrate 2-10 warps.

When the number of fixing points increases, the maximum span decreases accordingly; however, too many fasteners 2-50 occupy the arrangement area of other electronic components on the substrate 2-10. Therefore, in one embodiment of the present application, the number of fasteners 2-50 is 3, and the distance between any two adjacent fasteners 2-50 is equal; the lines connecting the centers of adjacent fasteners 2-50 form an equilateral triangle, which has high structural stability, distributing stress on the substrate 2-10 more uniformly. Each fastener 2-50 bears a relatively small share of the force, avoiding excessive localized force that would increase the warpage amount.

The equilateral triangle layout reduces the maximum span of different positions on the substrate 2-10, so that the warpage amount of each region also decreases accordingly, which can significantly reduce the warpage of the substrate 2-10. The design with 3 fasteners 2-50 has multiple characteristics of uniform force distribution, reduced localized stress concentration, improved overall stability, and reduced maximum span, which can effectively reduce the warpage of the substrate 2-10, ensure precise positions of the transmitter chip 2-20 and the receiver chip 2-30 on the substrate 2-10, prevent the optical positions of the transmitter chip 2-20 and the receiver chip 2-30 relative to the lenses 2-220 from shifting due to increased warpage, and thereby improve the ranging performance of the LiDAR 1000.

In some embodiments, the fasteners 2-50 connect the reinforcing member 2-40 and the edge region of the substrate 2-10; the edge region of the substrate 2-10 is generally the structurally weakest part and is susceptible to external forces and deformation. Connecting the fasteners 2-50 to the edge region can effectively enhance the rigidity of that region, which helps maintain the flatness of the entire substrate 2-10, improve its structural stability, and thereby reduce bending and warpage at the edges.

The uniform arrangement of fasteners 2-50 in the edge region can reduce stress differences between the edge region and the central region of the substrate 2-10. This allows the stress on the substrate 2-10 to be more uniform when subjected to forces. The fasteners 2-50 can uniformly distribute stress to the connection portions of the reinforcing member 2-40 and the substrate 2-10, thereby forming a more stable structural frame that can better resist deformation of the substrate 2-10 in all directions, improving the mechanical stability of the entire transceiver circuit board 2-100, thereby reducing the warpage risk caused by uneven stress.

In some embodiments, the fastener 2-50 may also be one of a welding member and a snap-fit member. When the fastener 2-50 is a welding member, it can provide very high connection strength, making the reinforcing member 2-40 and the substrate 2-10 into a whole, enhancing the rigidity and stability of the entire structure, preventing loosening or detachment during use, ensuring long-term stable connection between the substrate 2-10 and the reinforcing member 2-40, and improving the reliability and service life of the LiDAR 1000. This is particularly important for LiDAR 1000 devices that operate in harsh environments for a long time; it can reduce the risk of device failure caused by connection problems. For example, in LiDAR 1000 devices used in industrial environments with extremely high requirements for mechanical strength, welding members can ensure that the substrate 2-10 remains stable when subjected to intense vibration and impact, without warpage caused by loose connections.

When the fastener 2-50 is a snap-fit member, it makes the lens barrel body 2-211, the reinforcing member 2-40, and the substrate 2-10 detachably connected; during installation, the operation can generally be completed by hand or with simple tools, greatly improving production efficiency and maintenance convenience, shortening the production cycle, and reducing production and installation costs; during maintenance, quick disassembly and reassembly can also be achieved, reducing maintenance costs.

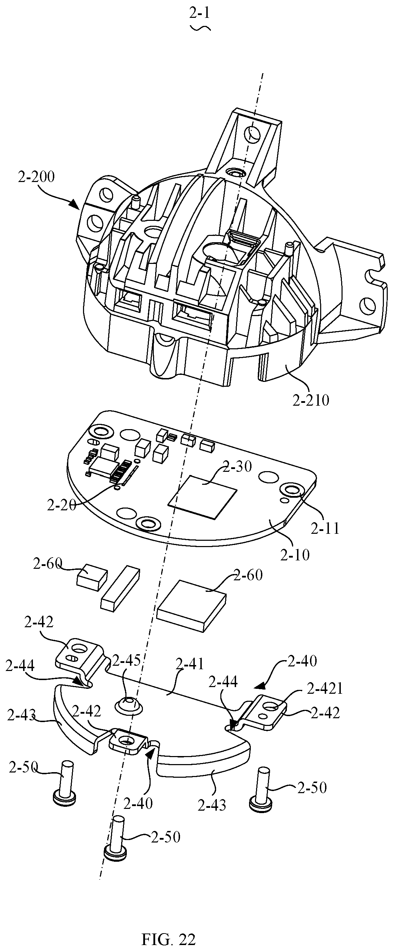

In some embodiments, referring to FIGS. 22 through 24, the reinforcing member 2-40 as a whole is plate-shaped; the plate-shaped reinforcing member 2-40 has a simple shape, is easy to process and manufacture, and can provide large-area support, significantly enhancing the overall rigidity of the substrate 2-10, making it harder to bend or deform under external forces. The enhancement of rigidity helps maintain the flatness of the substrate 2-10, reducing warpage, and thereby improving the structural stability of the substrate 2-10.

Specifically, the reinforcing member 2-40 comprises a main board portion 2-41 and a plurality of connecting arms 2-42; the main board portion 2-41 and the substrate 2-10 are spaced apart from each other to avoid other electronic components on the side of the substrate 2-10 facing away from the transmitter chip 2-20, and to enable the main board portion 2-41 to provide support without directly contacting the substrate 2-10, avoiding localized stress concentration that may result from direct contact.

The plurality of connecting arms 2-42 are connected at intervals around the periphery of the main board portion 2-41 and are connected to the fasteners 2-50 in a one-to-one correspondence; the connecting arms 2-42 extend from the main board portion 2-41 toward the substrate 2-10 to abut the substrate 2-10. This arrangement enables the reinforcing member 2-40 to uniformly transmit support force to a plurality of positions on the substrate 2-10 through the connecting arms 2-42, further enhancing the structural stability of the substrate 2-10.

The connecting arms 2-42 are allowed to have a certain degree of flexibility, capable of absorbing and distributing stress to a certain extent; this flexible connection can reduce stress concentration caused by external forces or temperature changes, further reducing the warpage of the substrate 2-10. Each connecting arm 2-42 and fastener 2-50 combination point forms a local support point in the edge region of the substrate 2-10, enhancing the rigidity of the substrate 2-10 at these positions. This local rigidity enhancement helps reduce deformation of the substrate 2-10 in these regions, thereby reducing overall warpage.

The combined structure of the main board portion 2-41 and the connecting arms 2-42 enables the reinforcing member 2-40 to form a stable support framework, effectively resisting deformation caused by external forces. This stable structure helps maintain the flatness of the substrate 2-10, improving its stability under various environmental conditions, thereby reducing the warpage of the substrate 2-10, ensuring precise positions of the transmitter chip 2-20 and the receiver chip 2-30, and improving the ranging performance and reliability of the LiDAR 1000.

Furthermore, the main board portion 2-41 is semi-circular in shape, so that the semi-circular arc edge can better distribute stress and reduce stress concentration. Two of the connecting arms 2-42 are provided on the straight edge of the main board portion 2-41 and face away from each other, while one connecting arm 2-42 is provided in the middle of the arc edge of the main board portion 2-41; correspondingly, the three fasteners 2-50 are connected to the three connecting arms 2-42 in a one-to-one correspondence. This layout causes the connecting arms 2-42 to form support points at the two ends of the straight edge, effectively distributing stress in the region and enhancing the rigidity of the edge of the substrate 2-10. Meanwhile, the connecting arm 2-42 at the middle of the arc edge can provide additional support for the substrate 2-10 along its axis of symmetry, further enhancing the overall stability of the substrate 2-10.

When the substrate 2-10 is semi-circular in shape, it can better adapt to the external structure of the lens barrel 2-210 when assembled with the lens module 2-200, improving the overall integrity and aesthetics of the transceiver module 2-1. In this case, the semi-circular main board portion 2-41 design allows the reinforcing member 2-40 to better adapt to the shape of the substrate 2-10, making the transceiver module 2-1 as a whole more integrated.

However, regardless of whether the substrate 2-10 is square, circular, or other irregular shapes, the best support effect can be achieved by adjusting the positions and numbers of the connecting arms 2-42, thereby reducing the warpage of the substrate 2-10.

It will be appreciated that according to the specific shape and loading condition of the substrate 2-10, the positions of the three connecting arms 2-42 can be fine-tuned; of course, it is necessary to ensure that each connecting arm 2-42 corresponds to one fastener 2-50, and that the distance between any two adjacent fasteners 2-50 is equal to minimize the maximum span. Therefore, whenever the position of one connecting arm 2-42 needs to be fine-tuned, the positions of the other connecting arms 2-42 need to be adjusted accordingly; i.e., all three connecting arms 2-42 and three fasteners 2-50 are moved as a whole to satisfy the above conditions, ensuring that the connection support by the reinforcing member 2-40 and the fasteners 2-50 can effectively reduce the warpage of the substrate 2-10.

In some embodiments, the reinforcing member 2-40 further comprises a plurality of flanges 2-43; for example, two flanges 2-43 are both connected to the outer periphery of the main board portion 2-41 and are folded from the main board portion 2-41 in a direction away from the substrate 2-10 to be spaced apart from the substrate 2-10. The flanges 2-43 may be integrally formed with the main board portion 2-41; each flange 2-43 is located between two adjacent connecting arms 2-42, which can adjust the mass distribution of the entire transceiver module 2-1. This design can bring the center of mass closer to the rotation center, thereby optimizing the dynamic balance, reducing unbalanced forces generated during rotation or vibration of the transceiver module 2-1, and improving the stability and reliability of the transceiver module 2-1.

At least one flange 2-43 located between two adjacent connecting arms 2-42 can provide additional support for the connecting arms 2-42, enhancing the stability of the connecting arms 2-42. This design helps uniformly distribute stress, reducing deformation of the connecting arms 2-42 when subjected to forces, further improving the overall structural stability of the transceiver module 2-1, thereby further reducing the warpage of the substrate 2-10.

In some embodiments, a crack-arrest groove 2-44 is provided between the main board portion 2-41 and each connecting arm 2-42 to prevent tearing at the bending location during screw fastening in the processing process. During processing, the connection between the connecting arms 2-42 and the main board portion 2-41 may be subjected to large stresses, especially when the connecting arms 2-42 need to be bent or twisted; these stresses may cause material tearing. The crack-arrest groove 2-44 reduces stress concentration in the region by reducing the material thickness at the connection, thereby preventing tearing. By preventing tearing at the connection between the main board portion 2-41 and the connecting arms 2-42, the crack-arrest groove 2-44 can improve processing accuracy, ensure connection quality between the connecting arms 2-42 and the main board portion 2-41, extend the service life of the reinforcing member 2-40, reduce damage caused by material fatigue, thereby improving the structural stability and reliability of the entire reinforcing member 2-40.

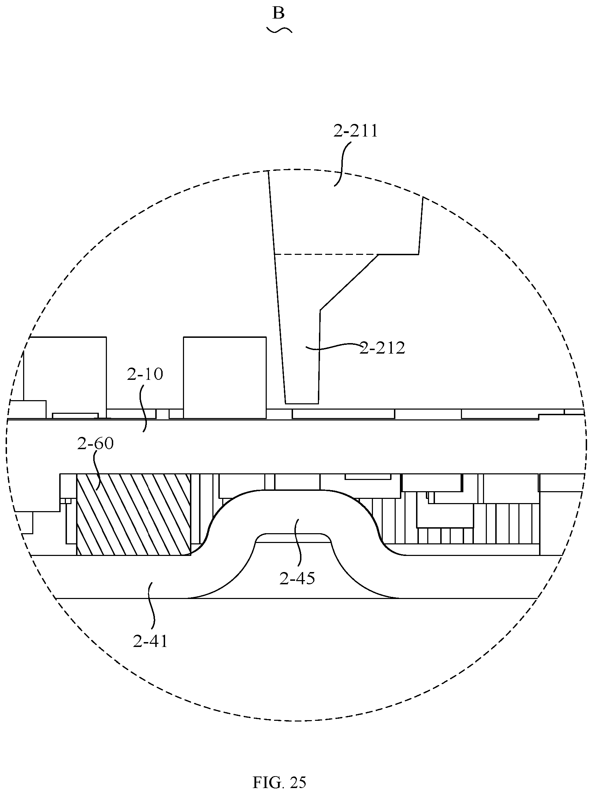

In some embodiments, as shown in FIGS. 24 and 25, the transceiver module 2-1 further comprises a thermally conductive member 2-60; the thermally conductive member 2-60 may be a thermally conductive gel, a thermally conductive grease, or the like; the material may be selected adaptively according to specific heat dissipation requirements and working environment. The thermally conductive member 2-60 is attached between the main board portion 2-41 and the substrate 2-10. Heat generated by electronic components such as the transmitter chip 2-20 and the receiver chip 2-30 can be transferred to the main board portion 2-41 through the thermally conductive member 2-60, and then the heat is dissipated to the external environment by the main board portion 2-41, thereby improving the heat dissipation effect.

It should be noted that the thermally conductive member 2-60 may also be provided corresponding to the transmitter chip 2-20, the receiver chip 2-30, and other heat-generating components on the substrate 2-10 to better improve the overall heat dissipation performance of the transceiver module 2-1, and can also reduce thermal stress concentration caused by local overheating, thereby reducing the warpage risk of the substrate 2-10.

Due to structural and hardware limitations, the transmitter chip 2-20 and the receiver chip 2-30 are generally disposed in the central region of the substrate 2-10. However, the connecting arms 2-42 and fasteners 2-50 are connected to the edge region of the substrate 2-10, and the main board portion 2-41 is spaced apart from the central region of the substrate 2-10, creating a risk of increased warpage in the central region of the substrate 2-10.

In some embodiments, referring to FIGS. 22 through 25, the reinforcing member 2-40 comprises a first boss 2-45; the first boss 2-45 protrudes from the surface of the main board portion 2-41 facing the substrate 2-10 and is spaced apart from the substrate 2-10. The lens barrel 2-210 (lens barrel body 2-211) further comprises a second boss 2-212 corresponding to the first boss 2-45; the second boss 2-212 protrudes from the surface of the lens barrel body 2-211 facing the substrate 2-10 and is spaced apart from the substrate 2-10.

In one embodiment, the second boss 2-212 is disposed between the transmitter chip 2-20 and the receiver chip 2-30 to avoid the transmitter chip 2-20 and the receiver chip 2-30; the second boss 2-212 is also disposed between the transmitter lens 2-221 and the receiver lens 2-222 to avoid the transmitter lens 2-221 and the receiver lens 2-222; this ensures unobstructed optical paths between the transmitter chip 2-20 and the receiver chip 2-30 and the lenses 2-220, without affecting the transmission and reception of optical signals due to obstruction by the second boss 2-212, thereby ensuring the ranging performance of the LiDAR 1000. At the same time, it ensures that the second boss 2-212 is close to the central region of the substrate 2-10.

The first boss 2-45 and the second boss 2-212 are disposed opposite each other on opposite sides of the substrate 2-10. The synergistic effect of the second boss 2-212 and the first boss 2-45 significantly improves the rigidity of the central region of the substrate 2-10, effectively resisting the tendency of the central region to bend and warp due to the lack of direct support from the connecting arms 2-42 and fasteners 2-50, and reducing the warpage phenomenon caused by lack of support in the central region of the substrate 2-10.

In some embodiments, both the second boss 2-212 and the first boss 2-45 are spaced apart from the substrate 2-10; the first boss 2-45 and the substrate 2-10 have a first gap along the thickness direction of the substrate 2-10, and the second boss 2-212 and the substrate 2-10 have a second gap along the thickness direction of the substrate 2-10.

First, without performing the overall installation of the transceiver module 2-1, a distance measuring tool is used to measure the initial warpage of the substrate 2-10; based on the initial warpage, the force required to provide support to the central region of the substrate 2-10 is calculated, and a comprehensive analysis is made of the material properties, dimensions, and expected load of the substrate 2-10; based on support requirements and the mechanical properties of the second boss 2-212 and the first boss 2-45, the reasonable gap settings between the second boss 2-212 and the first boss 2-45 and the substrate 2-10 are determined. The gap between the second boss 2-212 and the first boss 2-45 and the substrate 2-10 should be small enough to provide effective support when the central region of the substrate 2-10 warps, preventing further increase in warpage. However, it should not be too small to avoid introducing excessive constraints and stress concentration, which would cause more warpage. Different substrate 2-10 materials and designs lead to different warpage characteristics; by determining the gap based on warpage calculations, the design of the second boss 2-212 and the first boss 2-45 can be ensured to have good adaptability and versatility.

In some embodiments, the cross-sectional shape of the second boss 2-212 and the first boss 2-45 in a direction perpendicular to the board face of the substrate 2-10 is one of semi-circular, semi-elliptical, square, and conical; and the cross-sectional shapes of the second boss 2-212 and the first boss 2-45 may be the same or different.

The reasonable cross-sectional shape of the second boss 2-212 and the first boss 2-45 can optimize airflow distribution, reduce temperature differences of the substrate 2-10 caused by uneven airflow, thereby reducing the increase in warpage caused by uneven thermal expansion. Different cross-sectional shapes of the second boss 2-212 and the first boss 2-45 can also provide different degrees of assembly and adjustment flexibility, helping to better adapt to different installation conditions and requirements in practical applications.

In some embodiments, one of the substrate 2-10 and the lens barrel 2-210 is provided with a positioning hole, and the other of the substrate 2-10 and the lens barrel 2-210 is provided with a positioning post; one positioning post passes through one positioning hole; and a third gap exists between the positioning post and the corresponding positioning hole. The provision of the third gap can not only achieve quick positioning between the substrate 2-10 and the lens barrel 2-210 during the assembly process, but also serve as adjustment margin for the relative position between the lens module 2-200 and the transceiver circuit board 2-100 during the optical alignment process. After completing the optical alignment process between the transceiver circuit board 2-100 and the lens module 2-200, the reinforcing member 2-40, the substrate 2-10, and the lens barrel 2-210 are fixedly connected using the plurality of fasteners 2-50.

With the widespread application of LiDAR in the fields of robotics, autonomous driving, and other areas, the requirements for miniaturization, lightweight, and low-cost are increasingly strong. Currently, the transceiver modules of LiDAR exist in the following forms: (1) The transmitter lens and receiver lens are two independent lenses, and the transmitter board and receiver board are two independent circuit boards. Optical adjustment processes are required between the transmitter lens and the transmitter board, and between the receiver lens and the receiver board, for positioning and fixation. The disadvantage of this solution is that the large number of components leads to complex assembly processes, increasing production costs and time. Meanwhile, the multiple optical adjustment processes are difficult to guarantee high accuracy and tend to introduce cumulative errors, affecting the overall performance of the LiDAR. (2) The transmitter lens and receiver lens are an integrated lens, i.e., transceiver lenses, while the transmitter board and receiver board are still two independent circuit boards. Optical adjustment processes are still required between the transceiver lenses and the transmitter board and receiver board for positioning and fixation. Although this solution reduces the number of components to a certain extent, the assembly process remains relatively complex and costly. Moreover, due to the difficulty of connecting and adjusting the circuit boards, the positional errors of the transmitter and receiver components may still be large, affecting the optical performance of the radar, such as beam collimation and focusing accuracy. (3) The transmitter lens and receiver lens are two independent lenses, while the transmitter board and receiver board are an integrated circuit board, i.e., a transceiver circuit board. Optical adjustment processes are required between the transmitter lens and the transceiver circuit board, and between the receiver lens and the transceiver circuit board, for positioning and fixation. Although this solution simplifies the circuit board design, the number of components remains large, the assembly process is complex, and the difficulty of optical adjustment is high. Due to the difficulty in ensuring matching accuracy between the two independent lenses and the transceiver circuit board, deviations in the transmitting optical path and receiving optical path are likely to occur, thereby affecting the detection accuracy and stability of the LiDAR.

In summary, the transmitter lens, receiver lens, transmitter board, and receiver board are mostly independently configured or separately combined, resulting in a large number of components with large relative positional errors that are difficult to precisely control. This directly affects the optical performance of the LiDAR, such as beam collimation, focusing accuracy, detection accuracy, and stability, making it difficult to meet the application requirements of high-performance LiDAR.

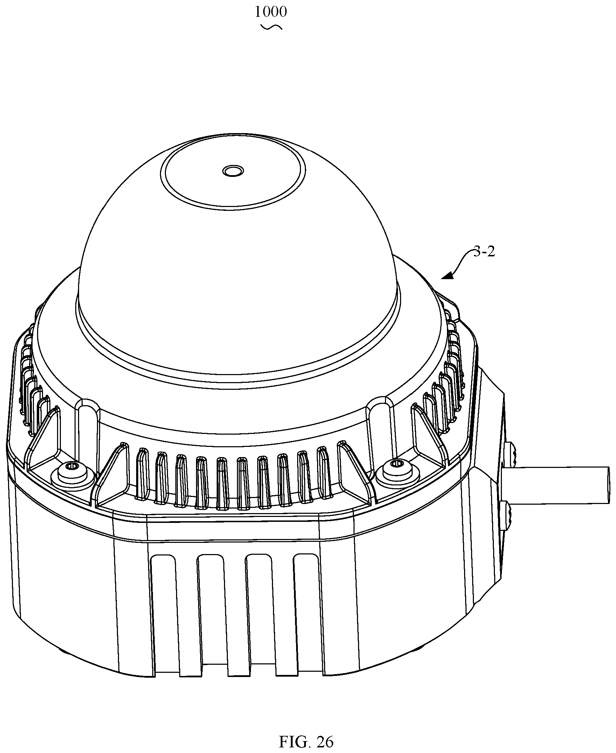

Referring to FIGS. 26 through 28, embodiments of the present application propose a LiDAR 3-1000. The LiDAR 3-1000 may be applied in fields such as autonomous driving vehicles, robot navigation, and drone applications, and comprises a housing 3-2 and a transceiver module 3-1.

The transceiver module 3-1 is disposed within the housing 3-2, and the housing 3-2 provides protection for the transceiver module 3-1. The housing 3-2 is made of a high-strength, corrosion-resistant material to ensure the LiDAR 3-1000 maintains operational stability in various harsh environments. In addition, to prevent moisture, dust, and other contaminants from entering the interior of the LiDAR 3-1000, the housing 3-2 needs to have good sealing performance. For example, welded breathable membrane technology may be used to achieve dust-proof and waterproof performance of the housing 3-2. Furthermore, since the transceiver module 3-1 generates a certain amount of heat during operation, heat dissipation performance needs to be considered in the design of the housing 3-2 to ensure the transceiver module 3-1 can operate stably even in high-temperature environments.

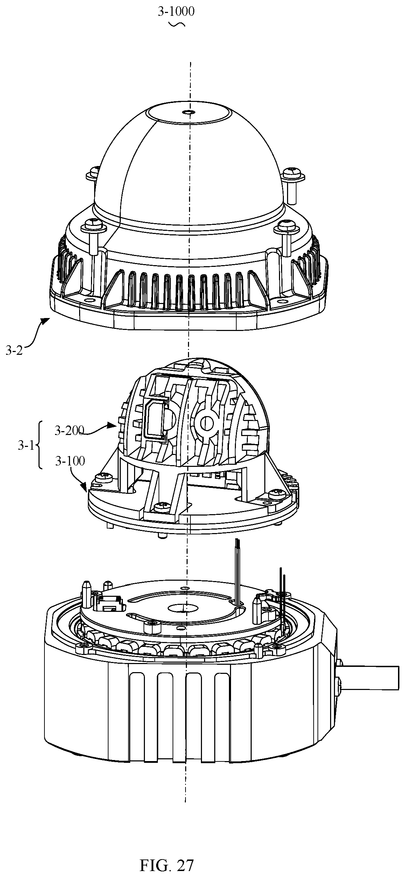

To address the above problems, referring to FIGS. 27 through 29, the present application proposes a transceiver module 3-1. In the embodiments of the present application, the transceiver module 3-1 comprises a transceiver circuit board 3-100, a lens module 3-200, and a plurality of spaced-apart adjusting members 3-40. The transceiver circuit board 3-100 comprises a substrate 3-10, a transmitter chip 3-20, and a receiver chip 3-30; both the transmitter chip 3-20 and the receiver chip 3-30 are electrically connected to the substrate 3-10. The transmitter chip 3-20 and the receiver chip 3-30 are mounted on the same side of the substrate 3-10, so that the transmitting optical path and the receiving optical path can be designed and arranged on the same plane of the substrate 3-10, facilitating alignment and adjustment of the optical axis, reducing the complexity of the optical path, and improving the consistency and stability of the optical paths.

For example, by placing the transmitter chip 3-20 and the receiver chip 3-30 on the same side, a reflective or transmissive optical system can be more conveniently adopted, enabling part of the optical elements to be shared for light emission and reception, thereby simplifying the optical path structure, reducing the difficulty and cost of optical path design. Both the transmitter chip 3-20 and the receiver chip 3-30 are mounted on the same side of the substrate 3-10; this layout can also more effectively utilize the space of the substrate 3-10, avoiding the additional space required when placing the transmitter chip 3-20 and the receiver chip 3-30 on opposite sides, thereby reducing the space occupied by the transceiver circuit board 3-100 in its thickness direction and improving space utilization. For the LiDAR 3-1000 that pursues miniaturization, transmitter and receiver chips 3-30 as well as related optical components can be accommodated in a more compact space, facilitating miniaturization and lightweight of the entire device, providing possibilities for the widespread application of the LiDAR 3-1000 in fields such as autonomous driving and robotics, particularly with obvious advantages in space-constrained scenarios.

The lens module 3-200 comprises a lens barrel 3-210 and transceiver lenses 3-220 disposed on the lens barrel 3-210; the transceiver lenses 3-220 correspond to the transmitter chip 3-20 and the receiver chip 3-30. The transceiver lenses 3-220 comprise a transmitter lens and a receiver lens; the transmitter chip 3-20 is located on the light-incident side of the transmitter lens, and the receiver chip 3-30 is located on the light-exiting side of the receiver lens.

The technical solution of the present application adopts an integrated transceiver circuit board 3-100 and transceiver lenses 3-220 for the transmission and reception of optical signals; this integrated design significantly reduces the number of components, making the overall layout of the transceiver module 3-1 more compact and reasonable in a limited space and improving space utilization, which is conducive to the miniaturization and lightweight design of the LiDAR 3-1000. The positions of the transmitter lens and receiver lens are relatively fixed within the lens barrel 3-210, reducing the reliance on high-precision optical adjustment of the transceiver lenses 3-220 during assembly, reducing assembly difficulty and production time, reducing manufacturing costs, and improving production efficiency.

The plurality of spaced-apart adjusting members 3-40 are disposed between the lens barrel 3-210 and the substrate 3-10 for adjusting the distance between the lens barrel 3-210 and the substrate 3-10. The adjusting members 3-40 make the distance between the lens barrel 3-210 and the substrate 3-10 adjustable, thereby precisely controlling the relative positional relationship between the transmitter lens and the transmitter chip 3-20, and between the receiver lens and the receiver chip 3-30.

In the transceiver module 3-1 of the LiDAR 3-1000, the transmitter chip 3-20, the receiver chip 3-30, and the corresponding lenses require an optical adjustment process, also known as the AA (Active Alignment) process, to precisely adjust the relative positions of the lens and the sensor, ensuring imaging clarity and consistency. The core steps include active alignment, UV adhesive curing, and others, to eliminate the effect of assembly tolerances on imaging quality.

The technical solution of the present application uses a plurality of spaced-apart adjusting members 3-40 disposed between the lens barrel 3-210 and the substrate 3-10 to achieve the purpose of the optical adjustment process in a simple and convenient manner, thereby precisely adjusting the optical distance between the lens module 3-200 and the transceiver circuit board 3-100, reducing positional errors, ensuring the relative positional relationship between the lens module 3-200 and the transceiver circuit board 3-100, and thereby ensuring accurate transmission and processing of optical signals.

The adjusting members 3-40 can fine-tune the position of the lens barrel 3-210, compensating for positional deviations caused by manufacturing tolerances, assembly errors, and other factors, enabling the optical system to work better collaboratively, improving the quality and detection accuracy of optical signals, ensuring precise transmission of emission beams and efficient collection of received optical signals, improving beam collimation and focusing accuracy, reducing scattering and loss of optical signals, and thereby improving optical performance.

Through the adjustment function of the adjusting members 3-40, the optical distance between the lens module 3-200 and the transceiver circuit board 3-100 can be flexibly adjusted according to different optical design requirements. This allows the optical-mechanical component to adapt to changes in various optical parameters, such as lenses with different focal lengths, requirements for different emission and reception angles, etc., providing greater flexibility in the design of the LiDAR 3-1000 and meeting requirements of different application scenarios and performance indicators.

The plurality of spaced-apart adjusting members 3-40 also provide uniform and stable support for the lens barrel 3-210, making its mounting on the substrate 3-10 more stable and reliable. This robust structure can effectively resist the influence of external vibration, temperature changes, and other environmental factors on the transceiver module 3-1, ensuring that the relative position between the lens barrel 3-210 and the substrate 3-10 remains stable over long-term use, thereby maintaining the stability and consistency of optical performance.

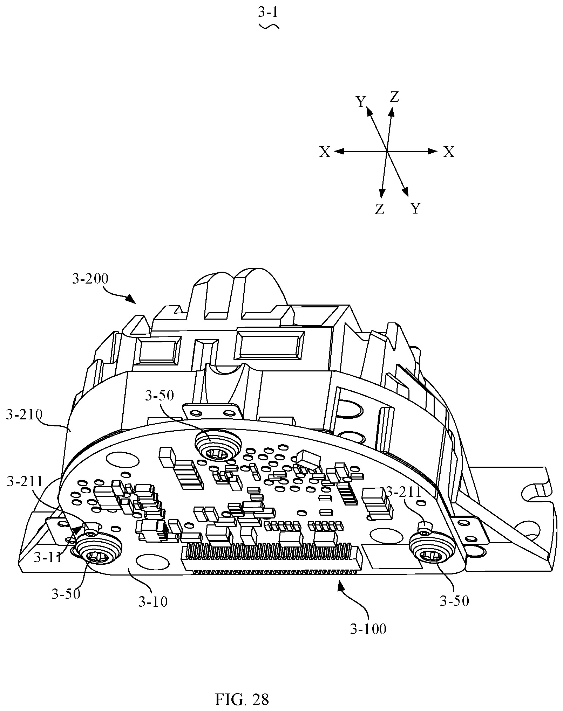

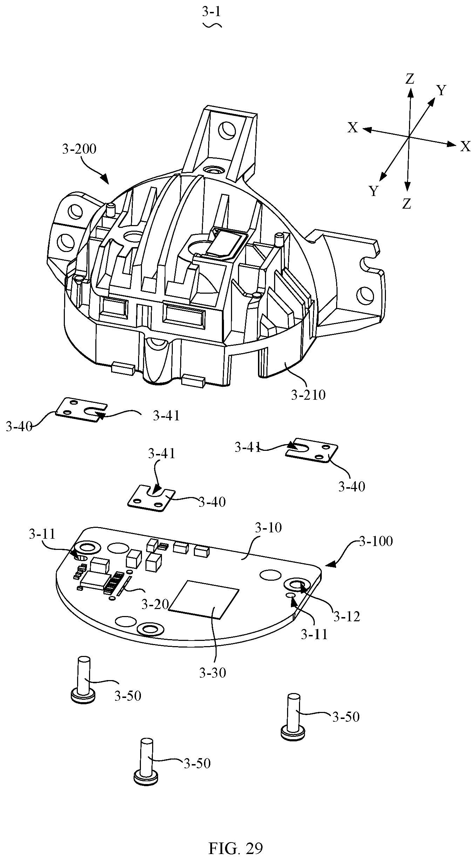

In one embodiment, as shown in FIGS. 28 and 29, the board face of the substrate 3-10 is parallel to the first direction X and the second direction Y, and perpendicular to the third direction Z. The first direction X, the second direction Y, and the third direction Z are mutually perpendicular to each other in pairs. The shape of the substrate 3-10 matches the contour of the edge of the lens barrel 3-210, improving the overall integrity and aesthetics of the transceiver module 3-1. In this case, the length direction of the substrate 3-10, i.e., the extension direction of the straight edge of the substrate 3-10, is the first direction X, which is parallel to the board face of the substrate 3-10; and the direction perpendicular to both the board face of the substrate 3-10 and the length direction (i.e., the first direction X) of the substrate 3-10 is the second direction Y. The axes on which the centers of gravity of the substrate 3-10 and the lens barrel 3-210 lie coincide in the third direction Z and extend along the third direction Z, so that the substrate 3-10 and the lens barrel 3-210 are disposed opposite each other in the third direction Z.

In some embodiments, the adjusting member 3-40 is a shim satisfying at least one of the following conditions: the thicknesses of the plurality of shims are all equal; at least two shims have different thicknesses from each other; or at least one shim has a wedge shape with a gradually varying thickness.

The following provides a detailed description of the specific forms of the adjusting member 3-40:

In one embodiment, when the thicknesses of the plurality of shims are all equal, using shims of equal thickness can provide uniform support between the lens barrel 3-210 and the substrate 3-10. By simultaneously replacing multiple shims at different positions between the lens barrel 3-210 and the substrate 3-10, the relative distance between the lens barrel 3-210 and the substrate 3-10 in the third direction Z can be adjusted, thereby adjusting the optical distance between the lens module 3-200 and the transceiver circuit board 3-100 and reducing positional errors.

For example, replacing with multiple shims of equal thickness but thicker than the original shims can achieve translational adjustment of the lens barrel 3-210 and the substrate 3-10 in the third direction Z; i.e., increasing the relative distance between the lens barrel 3-210 and the substrate 3-10 in the third direction Z so that the substrate 3-10 is farther from the lens barrel 3-210. This ensures that during translational adjustment of the substrate 3-10 in the third direction Z, the horizontal or vertical state with respect to the lens barrel 3-210 is maintained, helping to achieve high-precision optical calibration.

As another example, replacing with multiple shims of equal thickness but thinner than the original shims can likewise achieve translational adjustment of the lens barrel 3-210 and the substrate 3-10 in the third direction Z; while reducing the relative distance between the lens barrel 3-210 and the substrate 3-10 in the third direction Z so that the substrate 3-10 is closer to the lens barrel 3-210, the horizontal or vertical state of the substrate 3-10 with the lens barrel 3-210 is maintained, avoiding optical path jitter caused by positional changes.

In one embodiment, when at least two shims have different thicknesses from each other, using shims of different thicknesses can achieve height difference adjustment between the lens barrel 3-210 and the substrate 3-10 at different positions. By selecting a combination of shims of appropriate thicknesses, the inclination angle of the substrate 3-10 can be precisely controlled, achieving rotational adjustment of the substrate 3-10 around the first direction X or around the second direction Y, thereby adjusting the optical distance between the lens module 3-200 and the transceiver circuit board 3-100 and reducing positional errors, to meet more complex optical adjustment requirements, compensating for errors at different positions, and improving the flexibility and adaptability of the optical system.

In one embodiment, at least one shim has a wedge shape with a gradually varying thickness. A shim with gradually varying thickness provides a continuously adjustable adjustment method. During adjustment, by moving the position of a shim with gradually varying thickness, the distance between the lens barrel 3-210 and the substrate 3-10 can be smoothly varied within a certain range, thereby adjusting the optical distance between the lens module 3-200 and the transceiver circuit board 3-100 and reducing positional errors, achieving more precise optical distance adjustment. This shim is particularly suitable for scenarios requiring high-precision fine adjustment, better compensating for minor errors in the manufacturing and assembly process, and optimizing the alignment accuracy of the optical path.

In some embodiments, the material of the adjusting member 3-40 may be metallic materials such as stainless steel, aluminum alloy, and copper alloy, or non-metallic materials such as plastic, ceramic, and rubber; and the materials of the plurality of adjusting members 3-40 may be the same or different.

In one embodiment, the material of the adjusting member 3-40 may be aluminum alloy, which is lightweight, high-strength, corrosion-resistant, and has good processability, enabling weight reduction of the transceiver module 3-1 while maintaining structural strength and adjustment accuracy.

In one embodiment, the material of the adjusting member 3-40 may also be silicone, which has good elasticity and weather resistance, and a wide temperature range, ensuring the function of the adjusting member 3-40 at different temperatures; it can also absorb vibration and impact, providing stable elastic performance to protect the transceiver module 3-1; the present application does not specifically limit this.

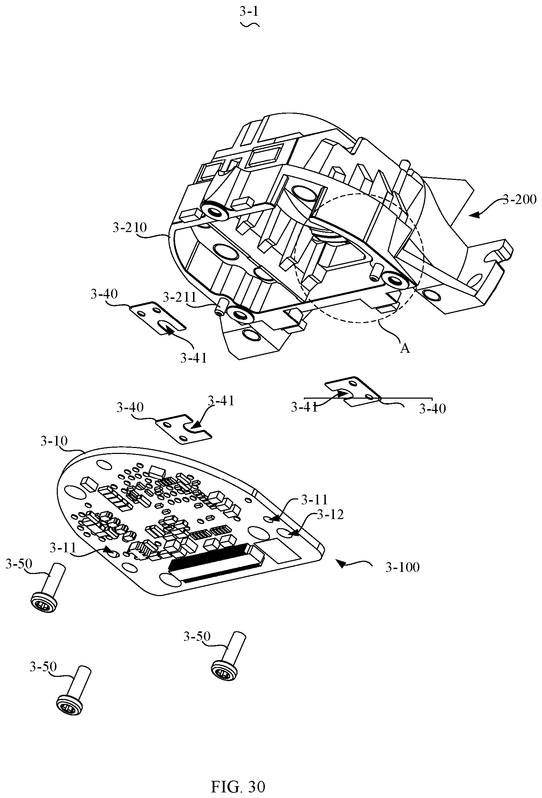

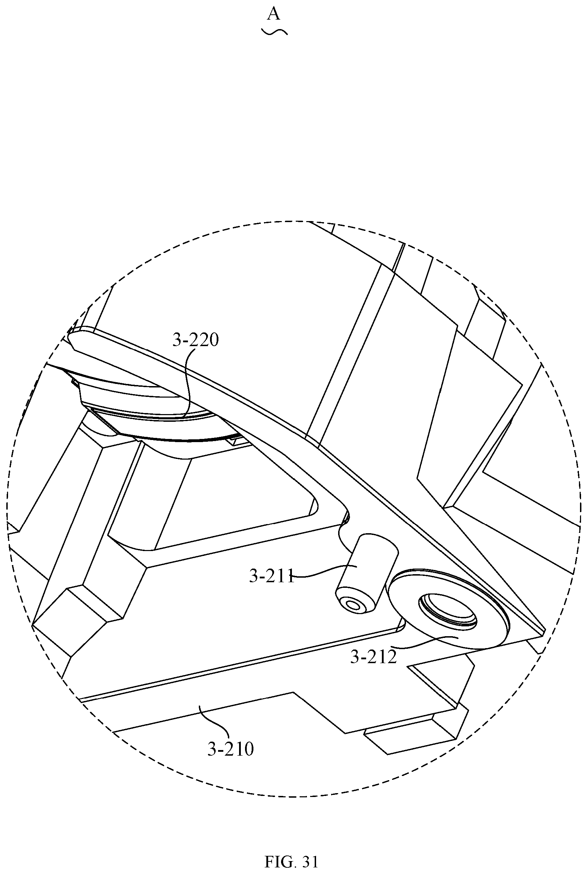

In some embodiments, referring to FIGS. 28 through 31, one of the substrate 3-10 and the lens barrel 3-210 is provided with a positioning hole 3-11, and the other of the substrate 3-10 and the lens barrel 3-210 is provided with a positioning post 3-211; the positioning post 3-211 passes through the positioning hole 3-11 to limit relative displacement between the substrate 3-10 and the lens barrel 3-210. Through the mutual cooperation of the positioning hole 3-11 and the positioning post 3-211, the substrate 3-10 and the lens barrel 3-210 can be quickly and accurately positioned and connected without requiring complex optical adjustment processes, simplifying the assembly process, reducing the time and equipment investment required for assembly, and improving production efficiency.

The precise design and manufacturing of the positioning hole 3-11 and the positioning post 3-211 can ensure that the relative position between the substrate 3-10 and the lens barrel 3-210 after assembly meets the optical design requirements, achieving precise alignment between the transmitter lens and the transmitter chip 3-20, and between the receiver lens and the receiver chip 3-30, ensuring accurate transmission and processing of optical signals, and providing reliable assurance for the optical performance of the LiDAR 3-1000. The mutual limiting action of the positioning hole 3-11 and the positioning post 3-211 provides a stable mechanical connection between the substrate 3-10 and the lens barrel 3-210, enhancing the structural stability of the entire transceiver module 3-1. During operation of the LiDAR 3-1000, it can effectively resist the influence of external vibration, temperature changes, and other environmental factors on the optical system, ensuring stable overall position of the transceiver components and maintaining the stability and reliability of optical performance.

In actual production and installation, the cooperation connection of the positioning hole 3-11 and the positioning post 3-211 can first be used to mutually limit the substrate 3-10 and the lens barrel 3-210, achieving preliminary positioning; this enables quick and accurate positioning installation, preventing large positional errors between the substrate 3-10 and the lens barrel 3-210. Then, based on specific requirements in practical applications, the adjusting members 3-40 between the substrate 3-10 and the lens barrel 3-210 can be selectively adjusted; during adjustment, professional fixtures such as mechanical grippers may be used to grip and fix the transceiver circuit board 3-100 for precise and rigorous optical adjustment, thereby further reducing the positional error between the substrate 3-10 and the lens barrel 3-210, compensating for minor errors in manufacturing and assembly, and achieving adjustability of the optical distance between the transmitter lens and the transmitter chip 3-20, and between the receiver lens and the receiver chip 3-30, thereby achieving precise alignment of the optical system in different directions, meeting special requirements for optical path angles in different application scenarios, and improving the adaptability and flexibility of the LiDAR 3-1000.

In one embodiment, the positioning post 3-211 extends from the lens barrel 3-210 along the third direction Z; a gap exists between the positioning post 3-211 and the corresponding positioning hole 3-11, so that the substrate 3-10 can move along the first direction X or the second direction Y, or rotate around the third direction Z, to adjust the relative arrangement of the lens barrel 3-210 and the substrate 3-10 during the assembly process. The gap includes one or more combinations of a first gap and a second gap. The first gap means that the aperture of the positioning hole along the first direction X is greater than the diameter of the positioning post corresponding to that positioning hole along the first direction X. The second gap means that the aperture of the positioning hole along the second direction Y is greater than the diameter of the positioning post corresponding to that positioning hole along the second direction Y. The positioning holes 3-11 may include a plurality; the positioning posts 3-211 may also include a plurality; the plurality of positioning posts 3-211 insert and mate with the plurality of positioning holes 3-11 in a one-to-one correspondence, providing a stable connection between the substrate 3-10 and the lens barrel 3-210; the positional stability can be maintained during adjustment; the clearance fit of the positioning post 3-211 and positioning hole 3-11, i.e., the aperture of the positioning hole 3-11 being greater than the diameter of the positioning post 3-211, allows the positioning post 3-211 to have a certain range of movement within the positioning hole 3-11. Accordingly, by adjusting the relative position between the center of the positioning hole 3-11 and the center of the positioning post 3-211, the substrate 3-10 can be made to move along the first direction X or the second direction Y, or the substrate 3-10 can rotate around the third direction Z.

When it is required to move the substrate 3-10 along the first direction X, the axis of the positioning post 3-211 and the axis of the positioning hole 3-11 can be relatively moved along the first direction X; since the positioning post 3-211 is fixedly connected to the lens barrel 3-210, this causes the lens barrel 3-210 as a whole to move relative to the substrate 3-10 along the first direction X, thereby achieving relative displacement of the substrate 3-10 and the lens barrel 3-210 in the first direction X.

When it is required to move the substrate 3-10 along the second direction Y, the axis of the positioning post 3-211 and the axis of the positioning hole 3-11 can be relatively moved along the second direction Y, which can likewise achieve displacement of the substrate 3-10 and the lens barrel 3-210 in the second direction Y.

When it is required to rotate the substrate 3-10 around the third direction Z, the position of the positioning post 3-211 within the positioning hole 3-11 can be changed, i.e., the axis of the positioning post 3-211 and the axis of the positioning hole 3-11 are made to have a certain combination of offsets in the first direction X and the second direction Y. For example, by moving the positioning post 3-211 in the positioning hole 3-11 by a certain angle in the clockwise or counterclockwise direction, since the aperture of the positioning hole 3-11 is greater than the diameter of the positioning post 3-211, the positioning post 3-211 can rotate within the positioning hole 3-11, driving the lens barrel 3-210 and the substrate 3-10 to rotate around the third direction Z, which can likewise adjust the optical distance between the lens module 3-200 and the transceiver circuit board 3-100 and reduce positional errors.

Furthermore, at least two positioning holes 3-11 are spaced apart along the first direction X of the circuit board 3-10 and are both close to the edge of the substrate 3-10, enabling movement of the positioning post 3-211 within the positioning hole 3-11 to be more precisely converted into translation of the substrate 3-10 in the first direction X or the second direction Y, or rotation around the third direction Z. Since the positioning holes 3-11 are close to the edge of the substrate 3-10, a minor positional change of the positioning post 3-211 relative to the positioning hole 3-11 can cause a relatively noticeable displacement or rotation of the substrate 3-10 as a whole, achieving high-precision position adjustment.

This layout helps reduce accumulated errors caused by positional deviation of the positioning holes 3-11 and other factors; the positioning holes 3-11 being close to the edge have a relatively small adjustment range, making it easier to control adjustment accuracy, ensuring the substrate 3-10 reaches the expected optical position. Moreover, the positioning holes 3-11 being close to the edge of the substrate 3-10 allow stress to be more uniformly distributed at the edge of the substrate 3-10. During adjustment, when the positioning post 3-211 moves or rotates within the positioning hole 3-11, stress is mainly concentrated around the positioning holes 3-11 at the edge of the substrate 3-10, avoiding stress concentration in the central region of the substrate 3-10, thereby reducing the risk of deformation or damage of the substrate 3-10 due to stress concentration and improving structural stability. The two positioning holes 3-11 spaced apart in the length direction make the connection between the substrate 3-10 and the lens barrel 3-210 more stable; the cooperation of the positioning posts 3-211 and the positioning holes 3-11 forms stable support points at the two ends of the substrate 3-10, enhancing the connection strength between the substrate 3-10 and the lens barrel 3-210, enabling the entire transceiver module 3-1 to better resist the influence of external vibration, temperature changes, and other environmental factors during use, maintaining stable optical performance.

In some embodiments, the transceiver module 3-1 further comprises a plurality of spaced-apart fasteners 3-50; the fasteners 3-50 are screws used to connect the substrate 3-10 and the lens barrel 3-210, so that after completing the above optical adjustment, the substrate 3-10 and the lens barrel 3-210 are closely connected together; the fixing force of the fasteners 3-50 can effectively resist the influence of external vibration, temperature changes, and other factors on the adjusting members 3-40, ensuring no relative displacement between the substrate 3-10 and the lens barrel 3-210, effectively ensuring the stability and accuracy of the optical adjustment, and guaranteeing the long-term stability and reliability of the transceiver module 3-1.

In one embodiment, referring to FIGS. 28 through 31, the substrate 3-10 comprises a plurality of spaced-apart first screw holes 3-12, and the lens barrel 3-210 comprises a plurality of spaced-apart second screw holes 3-212. The adjusting member 3-40 is provided with a through-hole 3-41. One fastener 3-50 passes through one first screw hole 3-12, one through-hole 3-41, and one second screw hole 3-212 in sequence to fix the lens barrel 3-210, the adjusting member 3-40, and the substrate 3-10 after optical adjustment is completed. The cooperation of the through-hole 3-41 and the fastener 3-50 can firmly fix the adjusting member 3-40 between the lens barrel 3-210 and the substrate 3-10, preventing the adjusting member 3-40 from shifting or loosening during use, ensuring stability of the adjusted optical position and attitude. The shape and dimensions of the through-hole 3-41 are designed according to the type and dimensions of the fastener 3-50 to ensure the fastener 3-50 can pass through smoothly and provide sufficient fixing force.

When re-optical adjustment of the transceiver module 3-1 is required, simply loosen the fasteners 3-50 to adjust the position or angle of the adjusting members 3-40. After adjustment is completed, re-tighten the fasteners 3-50 to fix the adjusting members 3-40; the operation is simple and quick. This design allows the adjusting members 3-40 to be adjusted and re-fixed multiple times, facilitating repeated calibration during the production process and maintenance and optimization during use.

In one embodiment, the number of fasteners 3-50 is at least three, and the distance between the centers of any two adjacent first screw holes 3-12 is equal, and the distance between the centers of any two adjacent second screw holes 3-212 is equal. The shapes of the first screw holes 3-12 and the second screw holes 3-212 are not specifically limited and may be rectangular, circular, or other geometric shapes; the center of a screw hole refers to the geometric center of the geometric shape of the screw hole. The uniform distribution of the plurality of first screw holes 3-12 on the substrate 3-10 enables the plurality of fasteners 3-50 to be uniformly arranged on the substrate 3-10, ensuring that the substrate 3-10 is subjected to uniform force when fastened by the fasteners, avoiding deformation of the substrate 3-10 caused by excessive localized forces, and reducing stress concentration. Uniform force distribution helps maintain the flatness of the substrate 3-10 and reduces warpage stress caused by uneven forces. The uniformly arranged fasteners 3-50 can enhance the structural stability of the substrate 3-10. When subjected to external forces or temperature changes, the uniformly distributed fasteners 3-50 can better maintain the shape of the substrate 3-10, reducing warpage caused by structural instability.

When the substrate 3-10 is provided with a plurality of optical elements, the positions on the substrate 3-10 available for arranging the plurality of fasteners 3-50 are limited; within the constraint of the available area of the substrate 3-10, the more uniformly arranged fasteners 3-50 there are, generally the better the improvement effect on warpage. More fasteners 3-50 can provide more support points, further distributing stress, improving the flatness of the substrate 3-10, and reducing warpage of the substrate 3-10; therefore, the number of fasteners 3-50 is at least three, i.e., the number may be 4, 5, 7, 8, or the like; the present application does not specifically limit the number of fasteners 3-50.

According to the definition of warpage, warpage equals the warpage amount divided by the maximum span of fixing points, where the maximum span refers to the maximum distance between two fasteners 3-50 connected on the substrate 3-10, and the warpage amount refers to the height difference of the warped position relative to an ideal plane (i.e., the plane on which the substrate 3-10 lies when not warped) when the substrate 3-10 warps. When the number of fixing points increases, the maximum span decreases accordingly; however, too many fasteners 3-50 occupy the arrangement area of other optical elements on the substrate 3-10. Therefore, in one embodiment, the number of fasteners 3-50 is 3, and the distance between any two adjacent fasteners 3-50 is equal; the lines connecting the center points of adjacent fasteners 3-50 form an equilateral triangle, which has high structural stability, distributing stress on the substrate 3-10 more uniformly. Each fastener 3-50 bears a relatively small share of the force, avoiding excessive localized force that would increase the warpage amount. The design with 3 fasteners 3-50 has multiple characteristics of uniform force distribution, reduced localized stress concentration, improved overall stability, and reduced maximum span, which can effectively reduce the warpage of the substrate 3-10.

Reducing the warpage of the substrate 3-10 also greatly helps reduce the positional error between the substrate 3-10 and the lens barrel 3-210. Excessive warpage of the substrate 3-10 causes the substrate 3-10 as a whole to bow or twist, causing the positions of the transmitter chip 3-20 and the receiver chip 3-30 to shift relative to the transceiver lenses 3-220 in the lens barrel 3-210. This changes the transmission and reception paths of optical signals, affecting beam collimation and focusing accuracy, causing loss of optical signals and decreased detection accuracy. Therefore, the above provision of the fasteners 3-50 ensures precise positions of the transmitter chip 3-20 and the receiver chip 3-30 on the substrate 3-10, prevents the optical positions of the transmitter chip 3-20 and the receiver chip 3-30 relative to the lenses from shifting due to increased warpage, and thereby improves the optical performance of the LiDAR 3-1000.

In some embodiments, referring again to FIGS. 28 through 31, the fasteners 3-50 connect the lens barrel 3-210 and the edge region of the substrate 3-10. The edge region of the substrate 3-10 is generally the structurally weakest part and is susceptible to external forces and deformation. Connecting the fasteners 3-50 to the edge region can effectively enhance the rigidity of that region, helping to maintain the flatness of the entire substrate 3-10, improving its structural stability, thereby reducing bending and warpage at the edges, and effectively reducing the positional error between the transceiver circuit board 3-100 and the lens module 3-200.

The uniform arrangement of fasteners 3-50 in the edge region can reduce stress differences between the edge region and the central region of the substrate 3-10. This allows the stress on the substrate 3-10 to be more uniform when subjected to forces. The fasteners 3-50 can uniformly distribute stress to the connection portions of the substrate 3-10 and the lens barrel 3-210, thereby forming a more stable structural frame that can better resist deformation of the substrate 3-10 in all directions, improving the mechanical stability of the entire transceiver module 3-1, thereby reducing the warpage risk caused by uneven stress.

In some embodiments, the fasteners 3-50 may also be one of a welding member, a snap-fit member, and an adhesive member. In one embodiment, when the fastener 3-50 is a welding member, it can provide very high connection strength, making the substrate 3-10 and the lens barrel 3-210 into a whole, enhancing the rigidity and stability of the entire structure, preventing loosening or detachment during use, thereby ensuring long-term stable connection between the transceiver circuit board 3-100 and the lens module 3-200, and improving the reliability and service life of the transceiver module 3-1. This is particularly important for LiDAR 3-1000 devices that operate in harsh environments for a long time; it can reduce the risk of device failure caused by connection problems. For example, in LiDAR 3-1000 devices used in industrial environments with extremely high requirements for mechanical strength, welding members can ensure that the transceiver module 3-1 remains stable when subjected to intense vibration and impact, without warpage caused by loose connections.

In one embodiment, when the fastener 3-50 is a snap-fit member, it makes the substrate 3-10 and the lens barrel 3-210 detachably connected; during installation, the operation can generally be completed by hand or with simple tools, greatly improving production efficiency and maintenance convenience, shortening the production cycle, and reducing production and installation costs; during maintenance, quick disassembly and reassembly can also be achieved, reducing maintenance costs.

In one embodiment, when the fastener 3-50 is an adhesive member (such as epoxy resin adhesive, UV adhesive, etc.), the adhesive member can be uniformly applied to the contact surfaces of the adjusting member 3-40 with the lens barrel 3-210 or the substrate 3-10. The thickness and coverage of the application should be controlled according to specific design requirements and the properties of the adhesive member. For example, the adhesive member may be applied to the edge of the lens barrel 3-210 to avoid the thickness of the adhesive member affecting the relative positional relationship between the substrate 3-10 and the lens barrel 3-210, preventing increased relative positional errors, and ensuring that the transceiver circuit board 3-100 and the lens assembly maintain a precise relative positional relationship over long-term use, preventing displacement or loosening caused by vibration, temperature changes, and other factors.

In some embodiments, the transceiver module 3-1further comprises a reinforcing member 3-60; the reinforcing member 3-60 is mounted on the side of the substrate 3-10 facing away from the transmitter chip 3-20, capable of offsetting deformation stress of the substrate 3-10 caused by the weight, heat, or other factors of the transmitter chip 3-20 and the receiver chip 3-30. This uniform support force helps maintain the flatness of the substrate 3-10 and reduces warpage. The reinforcing member 3-60 also reduces bending deformation of the substrate 3-10 when subjected to external forces. During operation of the LiDAR 3-1000, the reinforcing member 3-60 mounted on the substrate 3-10 can effectively reduce the deformation effect of mechanical vibration, impact, and other external forces on the substrate 3-10; the reinforcing member 3-60 can effectively enhance the bending resistance of the substrate 3-10, ensuring stability and reliability of the substrate 3-10 in complex use environments.

In one embodiment, the fastener 3-50 also serves to connect the reinforcing member 3-60 and the substrate 3-10 to fix the reinforcing member 3-60 to the substrate 3-10. The reinforcing member 3-60 comprises a plurality of third screw holes 3-621. One fastener 3-50 passes through one third screw hole 3-621, one first screw hole 3-12, one through-hole 3-41, and one second screw hole 3-212 in sequence. The reinforcing member 3-60 and the substrate 3-10 are closely connected together through the fastener 3-50, ensuring no relative displacement between the reinforcing member 3-60 and the substrate 3-10, so that the reinforcing member 3-60 can effectively transmit stress throughout the entire substrate 3-10 structure, enhancing the overall strength of the substrate 3-10. When the substrate 3-10 is subjected to external forces or internal stresses, the fastener 3-50 can uniformly distribute these stresses to the connection portions of the reinforcing member 3-60 and the substrate 3-10, preventing substrate 3-10 damage or deformation caused by localized stress concentration, reducing the risk of fatigue failure caused by stress concentration, thereby reducing the warpage of the substrate 3-10, and thereby reducing the positional error of the transmitter chip 3-20 and the receiver chip 3-30 relative to the transceiver lenses 3-220.

In addition, the reinforcing member 3-60 may be made of a material with good thermal conductivity and high material strength; for example, the reinforcing member 3-60 may be made of a metal material such as aluminum alloy, or may be made of a plastic material. The close contact between the reinforcing member 3-60 and the substrate 3-10 can provide an additional heat dissipation path for heat generated by the transmitter chip 3-20 and the receiver chip 3-30, conducting heat from the substrate 3-10 to the reinforcing member 3-60, and then dissipating it to the surrounding environment through the reinforcing member 3-60, thereby improving the overall heat dissipation efficiency of the substrate 3-10.

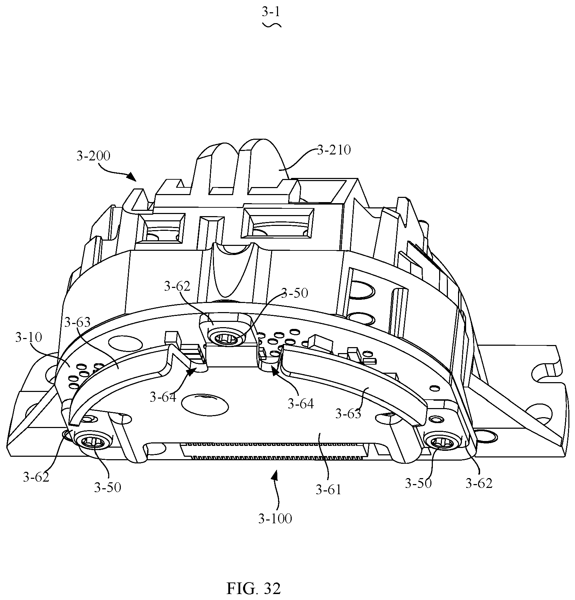

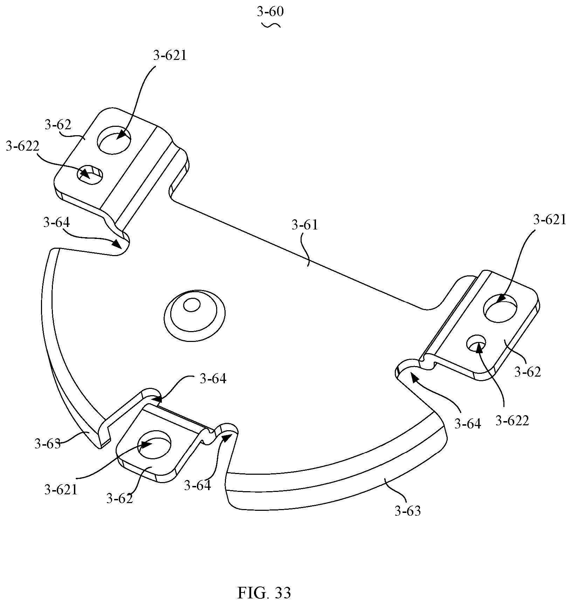

In some embodiments, referring to FIGS. 32 and 33, the reinforcing member 3-60 as a whole is plate-shaped; the plate-shaped reinforcing member 3-60 has a simple shape, is easy to process and manufacture, and can provide large-area support, significantly enhancing the overall rigidity of the substrate 3-10, making it harder to bend or deform under external forces. The enhancement of rigidity helps maintain the flatness of the substrate 3-10, reducing warpage, and thereby improving the structural stability of the substrate 3-10.

Specifically, the reinforcing member 3-60 comprises a main board portion 3-61 and a plurality of connecting arms 3-62; the main board portion 3-61 and the substrate 3-10 are spaced apart from each other to avoid other electronic components on the side of the substrate 3-10 facing away from the transmitter chip 3-20, and to enable the main board portion 3-61 to provide support without directly contacting the substrate 3-10, avoiding localized stress concentration that may result from direct contact.

The plurality of connecting arms 3-62 are connected at intervals around the periphery of the main board portion 3-61 and are connected to the fasteners 3-50 in a one-to-one correspondence; the connecting arms 3-62 extend from the main board portion 3-61 toward the substrate 3-10 to abut the substrate 3-10. Each connecting arm 3-62 is provided with one third screw hole 3-621. Corresponding to the first screw holes 3-12, the distance between the centers of any two adjacent third screw holes 3-621 is equal, enabling the reinforcing member 3-60 to uniformly transmit support force to a plurality of positions on the substrate 3-10 through the connecting arms 3-62, further enhancing the structural stability of the substrate 3-10.

The connecting arms 3-62 are allowed to have a certain degree of flexibility, capable of absorbing and distributing stress to a certain extent; this flexible connection can reduce stress concentration caused by external forces or temperature changes, further reducing the warpage of the substrate 3-10. Each connecting arm 3-62 and fastener 3-50 combination point forms a local support point in the edge region of the substrate 3-10, enhancing the rigidity of the substrate 3-10 at these positions. This local rigidity enhancement helps reduce deformation of the substrate 3-10 in these regions, thereby reducing overall warpage.

The combined structure of the main board portion 3-61 and the connecting arms 3-62 enables the reinforcing member 3-60 to form a stable support framework, effectively resisting deformation caused by external forces. This stable structure helps maintain the flatness of the substrate 3-10, improving its stability under various environmental conditions, thereby reducing the warpage of the substrate 3-10, ensuring precise positions of the transmitter chip 3-20 and the receiver chip 3-30, and improving the ranging performance and reliability of the LiDAR 3-1000.

In one embodiment, the plurality of connecting arms 3-62 comprises a first connecting arm, a second connecting arm, and a third connecting arm; the first connecting arm and the second connecting arm are arranged on one side of the main board portion 3-61 facing away from each other, and the third connecting arm is arranged on another side of the main board portion 3-61. For example, the main board portion 3-61 comprises a semi-circular arc edge, which can better distribute stress and reduce stress concentration. Two of the connecting arms 3-62 are provided on the straight edge of the main board portion 3-61 and face away from each other, while one connecting arm 3-62 is provided in the middle of the arc edge of the main board portion 3-61; correspondingly, the three fasteners 3-50 are connected to the three connecting arms 3-62 in a one-to-one correspondence. This layout causes the connecting arms 3-62 to form support points at the two ends of the straight edge, effectively distributing stress in the region and enhancing the rigidity of the edge of the substrate 3-10. Meanwhile, the connecting arm 3-62 at the middle of the arc edge can provide additional support for the substrate 3-10 along its axis of symmetry, further enhancing the overall stability of the substrate 3-10.

In one embodiment, the substrate 3-10 is provided with at least one positioning hole 3-11, and the lens barrel 3-210 is provided with at least one positioning post 3-211. Some of the connecting arms 3-62 are provided with a mating portion 3-622 corresponding to the positioning hole 3-11. One positioning post 3-211 passes through one positioning hole 3-11 and one mating portion 3-622 in sequence. In some embodiments, the mating portion 3-622 is a hole-type structure; the diameter of the positioning post 3-211 is smaller than the aperture of the mating portion 3-622, to achieve preliminary positioning among the reinforcing member 3-60, the substrate 3-10, and the lens barrel 3-210, improving assembly efficiency.

In some embodiments, regardless of whether the substrate 3-10 is square, circular, or other irregular shapes, the best support effect can be achieved by adjusting the positions and numbers of the connecting arms 3-62, thereby reducing the warpage of the substrate 3-10.

In some embodiments, the reinforcing member 3-60 further comprises two flanges 3-63; both flanges 3-63 are connected to the outer periphery of the main board portion 3-61 and are folded from the main board portion 3-61 in a direction away from the substrate 3-10 to be spaced apart from the substrate 3-10. The flanges 3-63 may be integrally formed with the main board portion 3-61; each flange 3-63 is located between two adjacent connecting arms 3-62, which can adjust the mass distribution of the entire transceiver module 3-1. This design can bring the center of mass closer to the rotation center, thereby optimizing the dynamic balance, reducing unbalanced forces generated during rotation or vibration of the transceiver module 3-1, and improving the stability and reliability of the transceiver module 3-1.

The flanges 3-63 located between two adjacent connecting arms 3-62 can provide additional support for the connecting arms 3-62, enhancing the stability of the connecting arms 3-62. This design helps uniformly distribute stress, reducing deformation of the connecting arms 3-62 when subjected to forces, further improving the overall structural stability of the transceiver module 3-1, thereby further reducing the warpage of the substrate 3-10.

In some embodiments, a crack-arrest groove 3-64 is provided between the main board portion 3-61 and each connecting arm 3-62 to prevent tearing at the bending location during screw fastening in the processing process. During processing, the connection between the connecting arms 3-62 and the main board portion 3-61 may be subjected to large stresses, especially when the connecting arms 3-62 need to be bent or twisted; these stresses may cause material tearing. The crack-arrest groove 3-64 reduces stress concentration in the region by reducing the material thickness at the connection, thereby preventing tearing. By preventing tearing at the connection between the main board portion 3-61 and the connecting arms 3-62, the crack-arrest groove 3-64 can improve processing accuracy, ensure connection quality between the connecting arms 3-62 and the main board portion 3-61, extend the service life of the reinforcing member 3-60, reduce damage caused by material fatigue, thereby improving the structural stability and reliability of the entire reinforcing member 3-60.

In some embodiments, the transceiver module 3-1further comprises a thermally conductive member; the thermally conductive member may be a thermally conductive gel, a thermally conductive grease, or the like; the material may be selected adaptively according to specific heat dissipation requirements and working environment. The thermally conductive member is attached between the main board portion 3-61 and the substrate 3-10. Heat generated by electronic components such as the transmitter chip 3-20 and the receiver chip 3-30 can be transferred to the main board portion 3-61 through the thermally conductive member, and then the heat is dissipated to the external environment by the main board portion 3-61, thereby improving the heat dissipation effect.

It should be noted that the thermally conductive member may also be provided corresponding to the transmitter chip 3-20, the receiver chip 3-30, and other heat-generating components on the substrate 3-10 to better improve the overall heat dissipation performance of the transceiver module 3-1, and can also reduce thermal stress concentration caused by local overheating, thereby reducing the warpage risk of the substrate 3-10.

In the description of the present application, it should be understood that the terms "first," "second," and the like are used for descriptive purposes only and are not to be construed as indicating or implying relative importance. For those of ordinary skill in the art, the specific meanings of the above terms in the present application can be understood according to specific circumstances. In addition, in the description of the present application, unless otherwise specified, "plurality" means at least two, e.g., two, three, four, etc. "And/or" describes the association relationship of associated objects, indicating that three relationships may exist; for example, A and/or B may represent: A alone exists, A and B exist simultaneously, and B alone exists. The character "/" generally indicates an "or" relationship between the associated objects.

The above inventions are only preferred embodiments of the present application and are of course not intended to limit the scope of the claims of the present application; therefore, equivalent variations made in accordance with the claims of the present application still fall within the scope of the present application.

In the drawings of the present embodiment, the same or similar reference numerals represent the same or similar components. In the description of the present application, it should be understood that terms indicating orientations or positional relationships such as "upper," "lower," "left," and "right" are based on the orientations or positional relationships shown in the drawings, and are only for the convenience of describing the present application and simplifying the description, and do not indicate or imply that the indicated device or element must have a specific orientation, be constructed and operated in a specific orientation; therefore, the terms describing positional relationships in the drawings are for illustrative purposes only and are not to be construed as limitations of the present application; those of ordinary skill in the art can understand the specific meanings of the above terms according to specific circumstances.

The foregoing is only the preferred embodiment of the present application and is not intended to limit the present application; any modifications, equivalent substitutions, and improvements made within the spirit and principles of the present application shall be included within the protection scope of the present application.

The specification of the application is supplemented by the following numbered clauses, which are not to be taken to be claims.
Clause 1: A transceiver module, comprising: a reinforcing member, a transceiver circuit board, a
   lens barrel, and a plurality of fasteners;
   the transceiver circuit board comprising a substrate, a transmitter chip, and a receiver chip, wherein the transmitter chip and the receiver chip are located on a same side of the substrate, and the substrate is located between the reinforcing member and the lens barrel;
   the substrate comprising a plurality of first screw holes, the lens barrel comprising a plurality of second screw holes, and the reinforcing member comprising a plurality of third screw holes; wherein one of the fasteners sequentially passes through one of the third screw holes, one of the first screw holes, and one of the second screw holes.
Clause 2: The transceiver module according to clause 1, wherein distances between centers of any two adjacent first screw holes are equal; or
   distances between centers of any two adjacent third screw holes are equal.
Clause 3: The transceiver module according to clause 1, wherein the reinforcing member comprises a main board portion and a plurality of connecting arms, wherein each of the connecting arms is provided with one of the third screw holes, and each of the connecting arms extends from the main board portion toward the substrate.
Clause 4: The transceiver module according to clause 3, wherein the reinforcing member further comprises a plurality of flanges, wherein each of the flanges is folded from the main board portion in a direction away from the substrate; and at least one of the flanges is located between two adjacent connecting arms.
Clause 5: The transceiver module according to clause 3, wherein a crack-arrest groove is provided between the main board portion and each of the connecting arms.
Clause 6: The transceiver module according to clause 3, further comprising a thermally conductive member, wherein the thermally conductive member is located between the main board portion and the substrate.
Clause 7: The transceiver module according to clause 3, wherein the reinforcing member further comprises a first boss extending from the main board portion toward the substrate, with a first gap existing between the first boss and the substrate.
Clause 8: The transceiver module according to clause 7, wherein the lens barrel further comprises a second boss corresponding to the first boss, and the second boss is formed extending from the lens barrel toward the substrate, with a second gap existing between the second boss and the substrate.
Clause 9: The transceiver module according to clause 1, wherein one of the substrate and the lens barrel is provided with a positioning hole, and the other is provided with a positioning post; one of the positioning posts passes through one of the positioning holes; and a third gap exists between the positioning post and the corresponding positioning hole.
Clause 10: A LiDAR, comprising: a housing and the transceiver module according to any one of clauses 1 to 9.
Clause 11: A transceiver module, comprising: a transceiver circuit board, a lens module, and a plurality of adjusting members;
   the transceiver circuit board comprising a substrate, a transmitter chip, and a receiver chip, wherein the transmitter chip and the receiver chip are mounted on a same side of the substrate;
   the lens module comprising a lens barrel and transceiver lenses disposed on the lens barrel; wherein the plurality of adjusting members are spaced apart between the lens barrel and the substrate.
Clause 12: The transceiver module according to clause 11, wherein the adjusting member is a shim satisfying at least one of the following conditions:
   thicknesses of the plurality of shims are all equal; or
   at least two of the shims have different thicknesses; or
   at least one shim has a wedge shape.
Clause 13: The transceiver module according to clause 11, wherein one of the substrate and the lens barrel is provided with a positioning hole, and the other is provided with a positioning post; and one of the positioning posts passes through one of the positioning holes.
Clause 14: The transceiver module according to clause 13, wherein a gap exists between the positioning post and the corresponding positioning hole.
Clause 15: The transceiver module according to clause 11, further comprising a plurality of fasteners; the substrate comprising a plurality of first screw holes, and the lens barrel comprising a plurality of second screw holes;
   each of the adjusting members is provided with a through-hole; and one of the fasteners sequentially passes through one of the first screw holes, one of the through-holes, and one of the second screw holes.
Clause 16: The transceiver module according to clause 15, further comprising a reinforcing member mounted on a side of the substrate facing away from the transmitter chip;
   the reinforcing member comprising a plurality of third screw holes; and one of the fasteners sequentially passes through one of the third screw holes, one of the first screw holes, one of the through-holes, and one of the second screw holes.
Clause 17: The transceiver module according to clause 16, wherein the reinforcing member comprises a main board portion and a plurality of connecting arms; each of the connecting arms is provided with one of the third screw holes; and the connecting arms extend from the main board portion toward the substrate.
Clause 18: The transceiver module according to clause 17, wherein the plurality of connecting arms comprise a first connecting arm, a second connecting arm, and a third connecting arm; and
   the first connecting arm and the second connecting arm are arranged on one side of the main board portion facing away from each other; and the third connecting arm is arranged on another side of the main board portion.
Clause 19: The transceiver module according to clause 17, wherein a crack-arrest groove is provided between the main board portion and each of the connecting arms.
Clause 20: A LiDAR, comprising: a housing and the transceiver module according to any one of clauses 11 to 19.

## Claims

1. An optical-mechanical assembly, comprising a transceiver unit, a transmitter lens, a receiver lens, a lens barrel, and an optical-mechanical bracket; wherein:
the transceiver unit comprises a transmitter chip, a receiver chip, and a transceiver board, both the transmitter chip and the receiver chip being mounted on the transceiver board;
the lens barrel comprises a transmitter light-passing aperture and a receiver light-passing aperture;
the transmitter lens is disposed at the transmitter light-passing aperture, the receiver lens is disposed at the receiver light-passing aperture, the transmitter chip is located on a light-incident side of the transmitter lens, the receiver chip is located on a light-exiting side of the receiver lens; and
the transceiver board is located between the optical-mechanical bracket and the lens barrel.

2. The optical-mechanical assembly of claim 1, wherein a thermally conductive gel is disposed between the transceiver board and the optical-mechanical bracket.

3. The optical-mechanical assembly of claim 1, wherein the optical-mechanical bracket comprises a main optical-mechanical bracket and a plurality of mounting seats; the plurality of mounting seats are configured to connect the main optical-mechanical bracket and the lens barrel; and the plurality of mounting seats are circumferentially spaced apart around the main optical-mechanical bracket.

4. The optical-mechanical assembly of claim 3, wherein a necked portion is formed at a connection position between the mounting seat and the main optical-mechanical bracket; and/or
the optical-mechanical bracket further comprises a flanged structure located on a side of the main optical-mechanical bracket away from the transceiver board; and the flanged structure is located between two adjacent mounting seats and is spaced apart from the mounting seats.

5. The optical-mechanical assembly of claim 1, wherein the transceiver unit further comprises a flexible circuit board, the flexible circuit board comprising a first connection end, a second connection end, and a bend portion for connecting the first connection end and the second connection end;
wherein the bend portion comprises a first sub-bend portion and a second sub-bend portion, the second sub-bend portion is located between the first sub-bend portion and the second connection end, the first sub-bend portion is located between the first connection end and the second sub-bend portion, the second sub-bend portion is fixedly connected to the optical-mechanical bracket, and the second connection end is electrically connected to the transceiver board.

6. The optical-mechanical assembly of claim 5, wherein the optical-mechanical assembly further comprises a fixing block; the first sub-bend portion and the second sub-bend portion together enclose a cavity;
wherein the fixing block is located in the cavity; one side of the fixing block is fixedly connected to the first sub-bend portion; and the other side of the fixing block is fixedly connected to the second sub-bend portion.

7. The optical-mechanical assembly of claim 6, wherein the fixing block has elasticity.

8. The optical-mechanical assembly of claim 1, wherein the lens barrel is provided with a partition extending in a direction toward the transceiver board, and the lens barrel forms a transmitter chamber and a receiver chamber on opposite sides of the partition, respectively;
wherein the transmitter chamber communicates with the transmitter light-passing aperture and the transmitter chip is located in the transmitter chamber; and
the receiver chamber communicates with the receiver light-passing aperture and the receiver chip is located in the receiver chamber.

9. The optical-mechanical assembly of claim 8, wherein a side wall of the lens barrel is formed with a communication opening communicating with the transmitter chamber or the receiver chamber; and a gap exists between the partition and the transceiver board, the gap communicating the transmitter chamber with the receiver chamber.

10. A LiDAR, comprising a housing and the optical-mechanical assembly of any one of claims 1 to 9, wherein the optical-mechanical assembly is disposed within the housing.
